# EUROPEAN PATENT APPLICATION

(11) **EP 4 773 124 A1**
(43) Date of publication of application: **08.07.2026**
(21) Application number: 25738527.8
(22) Date of filing: 09.01.2025
(51) Int. Cl.: G09G 3/20

(54) **IMAGE DISPLAY METHOD AND ELECTRONIC DEVICE**

(30) Priority: 09.01.2024 CN 202410035569
(71) Applicant: Honor Device Co., Ltd., Shenzhen, Guangdong 518040 (CN)
(72) Inventor: TIAN, Qifei, Shenzhen, Guangdong 518040 (CN); ZHANG, Kailiang, Shenzhen, Guangdong 518040 (CN)
(74) Representative: Isarpatent
(86) International application number: PCT/CN2025/071590
(87) International publication number: WO 2025/148999

(57) **Abstract**

This application provides an image display method and an electronic device. The method is applied to an electronic device including a display screen, and the method includes: generating a first Vsync signal at a first moment, and starting to display a first image in response to the first Vsync signal, where the first Vsync signal corresponds to a first Vsync signal period, and first display duration for displaying the first image is the same as duration of the first Vsync signal period; generating a second Vsync signal at a second moment, and starting to display a second image in response to the second Vsync signal, where the second Vsync signal corresponds to a second Vsync signal period, the second moment is after the first moment, and the second image is a next frame of image of the first image; and detecting whether composition of display data of a third image is completed after starting to display the second image, where the third image is a next frame of image of the second image; and delivering a control instruction to the display screen if composition of the display data of the third image is completed, where the control instruction is used to control a frequency of generating a Vsync signal. In this solution, a speed of displaying an image by the electronic device can be increased, and hand-following performance can be improved.

## Description

This application claims priority to Chinese Patent Application No. 202410035569.5, filed with the China National Intellectual Property Administration on January 09, 2024 and entitled "IMAGE DISPLAY METHOD AND ELECTRONIC DEVICE", which is incorporated herein by reference in its entirety.

### TECHNICAL FIELD

This application relates to the field of display technologies, and in particular, to an image display method and an electronic device.

### BACKGROUND

A refresh rate of a display screen of an electronic device may be 60 hertz (Hz), 70 Hz, 75 Hz, 80 Hz, 90 Hz, 120 Hz, or the like. When the display screen displays an image at different refresh rates, waiting duration for an image display driver of the electronic device to send an image to the display screen to drive the display screen to change a displayed picture is also different. An example in which the display screen refreshes and displays an image separately at the refresh rates of 60 Hz and 120 Hz is used. When the display screen uses the refresh rate of 60 Hz, waiting duration for the image display driver to write display data of the image into the display screen may be 1/60 seconds (s)=0.01667(s)=16.667 milliseconds (ms) at most. When the display screen uses the refresh rate of 120 Hz, waiting duration for the image display driver to write the display data of the image into the display screen also needs to be 1/120 (s)=0.00833(s)=8.33 (ms) at most.

However, when a user uses the electronic device, a scenario in which the user touches the display screen for interaction is common. The longer the waiting duration for the image display driver to write the display data of the image into the display screen to drive the display screen to display the image, the poorer hand-following performance from overall responsiveness of the electronic device to the touch operation of the user to change the displayed picture. Even when the display screen of the electronic device responds to the touch operation of the user to change the displayed picture at the refresh rate of 120 Hz, the user still feels that hand-following performance for picture change is relatively poor. Therefore, how to effectively shorten response duration for the electronic device to respond to the touch operation of the user, so as to improve hand-following performance when the displayed picture changes with the touch operation of the user is a problem that currently needs to be urgently resolved in the art.

### SUMMARY

Embodiments of this application provide an image display method and an electronic device, so as to shorten response duration for the electronic device to respond to a touch operation of a user, and increase a display speed of an image, thereby improving hand-following performance when a displayed picture changes with the touch operation of the user.

To achieve the foregoing objective, the following technical solutions are used in embodiments of this application:

According to a first aspect, an image display method is provided. The method is applied to an electronic device. The electronic device includes a display screen. The method includes: generating, by the electronic device, a first Vsync signal at a first moment, and displaying, by the display screen, a first image in response to the first Vsync signal, where the first Vsync signal corresponds to a first Vsync signal period, the first Vsync signal period corresponds to first display duration, and the first display duration is display duration of the first image; generating, by the electronic device, a second Vsync signal at a second moment, and displaying, by the display screen, a second image in response to the second Vsync signal, where the second Vsync signal corresponds to a second Vsync signal period, the second Vsync signal period is equal to the first Vsync signal period, and the second moment is after the first moment; and generating, by the electronic device, a third Vsync signal at a third moment in response to display data of the third image being ready, where the third Vsync signal corresponds to a third Vsync signal period, the third moment is after the second moment, and the third Vsync signal period is less than the first Vsync signal period.

In this embodiment of this application, after display data of an image is ready, an image display driver of the electronic device increases a frequency of a vertical synchronization signal. In response to the frequency-increased vertical synchronization signal, the image display driver writes display data that is of a target image and that is obtained by the electronic device in response to an interactive operation of the user into the display screen of the electronic device, thereby quickly driving the display screen to display the target image. In this way, in this solution, duration of waiting for display after display data of an image is ready can be effectively shortened, and a display speed of the image is increased. For a scenario in which the user touches the display screen for interaction, in this solution, response duration for the electronic device to respond to the touch operation of the user can be shortened, thereby improving hand-following performance when a displayed picture of the device changes with the interactive operation of the user.

In this application, because the image display driver increases the frequency of the vertical synchronization signal, after receiving the display data of the image corresponding to the interactive operation of the user, the image display driver may write the display data of the image into the display screen within a very short waiting time in response to the frequency-increased vertical synchronization signal, thereby quickly driving the display screen to refresh and display the image.

In a possible implementation, the second Vsync signal period corresponds to second display duration, the second display duration is less than the first display duration, and the second display duration is display duration of the second image.

In a possible implementation, the first display duration is 16.6 ms, and the second display duration is 13.8 ms.

In a possible implementation, the second display duration is a difference between the first Vsync signal period and the third Vsync signal period.

In this application, there may be a case in which duration between a moment at which display data of an image is ready and a moment at which a next VSync signal is to be generated exceeds two periods of 360 Hz, that is, exceeds 5.6 ms. In this case, in this application, a frequency of outputting a Vsync signal may be increased to 360 Hz, and a next VSync signal may be output 2.8 ms in advance, that is, the foregoing second display duration is a difference between the first Vsync signal period and the third Vsync signal period. In another example, in this application, a frequency of outputting a VSync signal may be increased to 360 Hz, and a next VSync signal may be output 5.6 ms in advance.

It may be understood that all the moment values mentioned in this application are approximate values, and a relatively small range of adjustment may be performed. For example, 2.8 ms may also be 2.7 ms, and 5.5 ms may also be 5.4 ms. This is not limited in this application.

In a possible implementation, the second Vsync signal period corresponds to the second display duration, the second display duration is greater than the first display duration, and the second display duration is the display duration of the second image.

In a possible implementation, in response to the third Vsync signal, the display screen displays the third image, and the third image is a next frame of image of the second image.

In a possible implementation, at a fourth moment, the electronic device generates a fourth Vsync signal, and the display screen displays a fourth image in response to the fourth Vsync signal, where the fourth moment is after the third moment, the fourth Vsync signal corresponds to a fourth Vsync signal period, the fourth Vsync signal period corresponds to fourth display duration, and the fourth display duration is display duration of the fourth image; and the fourth display duration is equal to the first display duration. Therefore, in this application, after the third Vsync signal is output in advance, the electronic device maintains the display duration of the fourth image.

In this application, after it is determined that display of the third image by the display screen tends to be stable, a frequency of outputting a Vsync signal may be reduced. In this way, a waste of power consumption of the device caused by the display screen outputting a frequency-increased Vsync signal for a long time is avoided, thereby saving power consumption of the device.

In a possible implementation, at a fifth moment, the electronic device generates a fifth Vsync signal, where the fifth Vsync signal corresponds to a fifth Vsync signal period, and the fifth Vsync signal period is equal to the first Vsync signal period. In this application, after the electronic device maintains the display duration of the fourth image, in a process of displaying a fifth image that is a next frame of the fourth image, the electronic device may continue to detect duration between a moment at which display data of a next frame of image of the fifth image is ready and a moment at which a next Vsync signal is to be generated.

In a possible implementation, the first image is a previous frame of image of the second image.

In a possible implementation, when the display screen displays the first image, duration for the display data of the second image to wait for the second Vsync signal is greater than 2.8 ms. In this application, duration for display data of a previous frame of image to wait for a next Vsync signal after the display data of the previous frame of image is ready may be further detected. If the duration is greater than specified duration (2.8 ms), a frequency-increased Vsync signal may be output in advance.

In a possible implementation, the first Vsync signal period is 16.6 ms, and the third Vsync signal period is 2.8 ms. It may be understood that a period corresponding to the highest refresh rate of 360 Hz of the electronic device is 2.8 ms. Therefore, a frequency of the third Vsync signal can be increased to a maximum of 360 Hz.

In a possible implementation, the electronic device further includes an image display driver. The method further includes: detecting, by the image display driver, whether the display data of the third image is ready in response to the display screen displaying the second image; and sending, by the image display driver, a control instruction to the display screen in response to the display data of the third image being ready, and generating, by the display screen, a third Vsync signal.

In a possible implementation, a new frame catch-up detection module is added to a system kernel layer of the electronic device, and the frame catch-up detection module detects whether display data of an image is ready, so as to increase a frequency of outputting a Vsync signal by the display screen when the frame catch-up detection module detects that the display data of the image is ready, thereby shortening duration of waiting for display after the display data of the image is ready, and improving hand-following performance.

According to a second aspect, this application provides an electronic device. The electronic device has a function of implementing the method according to the first aspect. The function may be implemented by using hardware, or may be implemented by executing corresponding software by hardware. The hardware or the software includes one or more modules corresponding to the foregoing function.

According to a third aspect, this application provides an electronic device. The electronic device includes a processor and a memory. The memory is configured to store computer program code. The computer program code includes computer-executable instructions. When the electronic device runs, the processor executes the computer-executable instructions, to enable the electronic device to perform the method according to the first aspect.

According to a fourth aspect, this application provides an electronic device. The electronic device includes a processor. The processor is configured to: be coupled to a memory and read instructions in the memory to perform the method according to the first aspect according to the instructions.

According to a fifth aspect, this application provides a computer-readable storage medium. The computer-readable storage medium stores computer instructions. When the computer instructions are run on an electronic device, the electronic device is enabled to perform the method according to the first aspect.

According to a sixth aspect, this application provides a computer program product including instructions. When the computer program product is run on a computer, the computer is enabled to perform the method according to the first aspect.

According to a seventh aspect, an apparatus (for example, the apparatus may be a display system) is provided. The apparatus includes a processor, configured to support an electronic device in implementing the functions in the first aspect. In a possible design, the apparatus further includes a memory. The memory is configured to store program instructions and data that are necessary for the electronic device.

For the technical effects brought by any one of design manners in the second aspect to the seventh aspect, refer to the technical effects brought by different implementations in the first aspect, and details are not described herein again.

### BRIEF DESCRIPTION OF DRAWINGS

FIG. 1 is a schematic diagram of a hardware structure of an electronic device according to an embodiment of this application;
FIG. 2 is a schematic diagram of a system architecture of an electronic device in a conventional technology;
FIG. 3 is a schematic diagram of a principle of layer drawing, rendering, composition, and image frame display that are performed by an electronic device in a conventional technology;
FIG. 4 is a schematic diagram of a system architecture of an electronic device according to an embodiment of this application;
FIG. 5 is a schematic diagram of a principle of layer drawing, rendering, composition, and image frame display that are performed by an electronic device according to an embodiment of this application;
FIG. 6 is a schematic diagram of a principle of layer drawing, rendering, composition, and image frame display that are performed by another electronic device according to an embodiment of this application;
FIG. 7 is a schematic diagram of a principle of layer drawing, rendering, composition, and image frame display that are performed by another electronic device according to an embodiment of this application;
FIG. 8 is a first schematic flowchart of an image display method according to an embodiment of this application;
FIG. 9 is a schematic diagram of a principle of layer drawing, rendering, composition, and image frame display that are performed by another electronic device according to an embodiment of this application;
FIG. 10 is a schematic diagram of a principle of layer drawing, rendering, composition, and image frame display that are performed by another electronic device according to an embodiment of this application;
FIG. 11 is a schematic diagram of a principle of layer drawing, rendering, composition, and image frame display that are performed by another electronic device according to an embodiment of this application;
FIG. 12 is a schematic diagram of duration of displaying an image by a display screen in a case according to an embodiment of this application;
FIG. 13 is a schematic diagram of a principle of sending an image for display by an electronic device in response to a frequency-increased Vsync signal in a case according to an embodiment of this application;
FIG. 14 is a schematic diagram of a system architecture and a data signal flow direction of an electronic device according to an embodiment of this application;
FIG. 15 is a schematic diagram of control logic in which an electronic device displays an image according to an embodiment of this application;
FIG. 16 is a second schematic flowchart of an image display method according to an embodiment of this application;
FIG. 17 is a schematic diagram of another control logic in which an electronic device displays an image according to an embodiment of this application;
FIG. 18 is a schematic diagram of control logic of obtaining duration of waiting for a next Vsync signal after display data of a second image is ready according to an embodiment of this application;
FIG. 19 is a schematic flowchart of configuring a frame catch-up solution according to an embodiment of this application; and
FIG. 20 is a schematic diagram of a structure of a chip system according to an embodiment of this application.

### DESCRIPTION OF EMBODIMENTS

The following describes technical solutions in embodiments of this application with reference to the accompanying drawings in the embodiments of this application. Obviously, the described embodiments are some but not all of the embodiments of this application. The terms "first" and "second" below are merely intended for a purpose of description, and shall not be understood as an indication or implication of relative importance or implicit indication of a quantity of indicated technical features. Therefore, a feature defined by "first", "second", and the like may explicitly or implicitly include one or more such features.

An embodiment of this application provides an image display method. The method may be applied to an electronic device including a display screen. In response to display data of an image being ready, a frequency of a vertical synchronization signal output by the display screen is increased, so that an image display driver of the electronic device sends the image for display in response to a higher-frequency vertical synchronization signal, thereby quickly driving the display screen to display the image.

It should be noted that, the electronic device may be an electronic device with a display screen, such as a mobile phone, a tablet computer, a desktop computer, a laptop computer, a handheld computer, a notebook computer, an ultra-mobile personal computer (ultra-mobile personal computer, UMPC), a netbook, a personal digital assistant (personal digital assistant, PDA), or an augmented reality (augmented reality, AR)\virtual reality (virtual reality, VR) device. A specific form of the electronic device is not specifically limited in this embodiment of this application.

Implementations of the embodiments of this application are described below in detail with reference to the accompanying drawings.

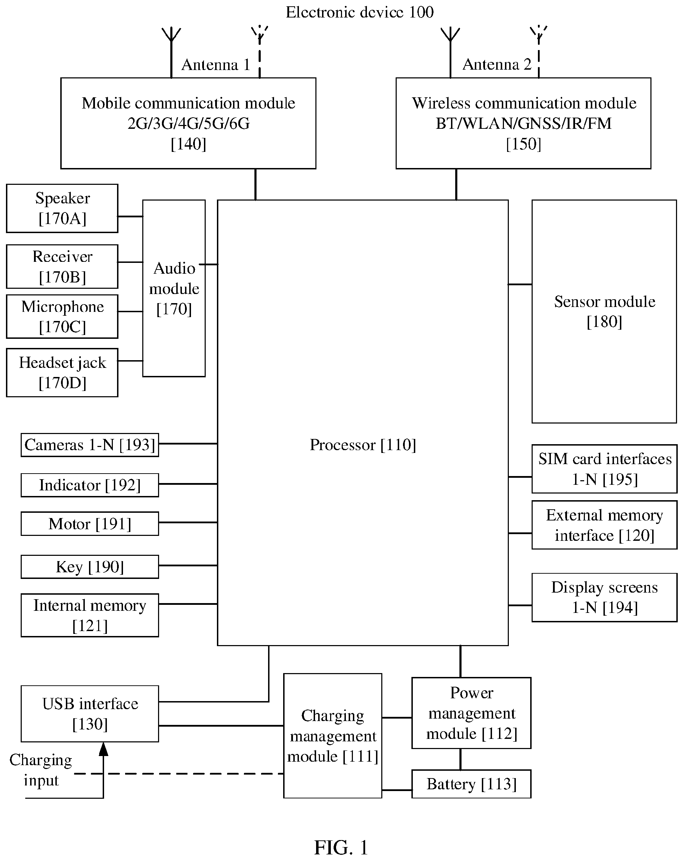

Referring to FIG. 1, FIG. 1 is a schematic diagram of a structure of an electronic device 100 according to an embodiment of this application. As shown in FIG. 1, the electronic device 100 may include a processor 110, an external memory interface 120, an internal memory 121, a universal serial bus (universal serial bus, USB) interface 130, a charging management module 111, a power management module 112, a battery 113, an antenna 1, an antenna 2, a mobile communication module 140, a wireless communication module 150, an audio module 170, a speaker 170A, a receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like.

It may be understood that the structure illustrated in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may be a nerve center and a command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 111 is configured to receive a charging input from a charger. The charging management module 111 may further supply power to the electronic device by using the power management module 112 while charging the battery 113. A wireless communication function of the electronic device 100 may be implemented by using the antenna 1, the antenna 2, the mobile communication module 140, the wireless communication module 150, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed into a diversity antenna of a wireless local area network. In some other embodiments, the antenna may be used together with a tuning switch.

The mobile communication module 140 may provide a solution applied to the electronic device 100 for wireless communication such as 2G/3G/4G/5G/6G. The modem processor may include a modulator and a demodulator. The wireless communication module 150 may provide a solution for wireless communication that is applied to the electronic device 100 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen (or referred to as a screen) 194 is configured to display an image, a video, and the like. The display screen 194 includes a display panel. The display panel may include but is not limited to a liquid crystal display (liquid crystal display, LCD), an organic light-emitting diode (organic light-emitting diode, OLED), an active-matrix organic light-emitting diode or active-matrix organic light emitting diode (active-matrix organic light-emitting diode, AMOLED), a flex light-emitting diode (flex light-emitting diode, FLED), a mini light-emitting diode (mini organic light-emitting diode, MINILED), a micro organic light-emitting diode (micro organic light-emitting diode, MicroLed), a quantum dot light emitting diode (quantum dot light emitting diodes, QLED), or the like. In some embodiments, the electronic device 100 may include one or N display screens 194, where N is a positive integer greater than 1.

The electronic device 100 may implement a shooting function by using the ISP, the camera 193, the video codec, the GPU, the display screen 194, the application processor, and the like.

The external memory interface 120 may be configured to be connected to an external memory card, for example, a Micro SD card, to extend a storage capability of the electronic device 200.

The internal memory 121 may be configured to store computer-executable program code, and the executable program code includes instructions.

The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playback function or an image playback function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function such as music playing or sound recording by using the audio module 170, the speaker 170A, the receiver 170B, the microphone 170C, the headset jack 170D, the application processor, the like.

The key 190 includes a power key, a volume key, or the like. The indicator 192 may be an indicator light.

The sensor module 180 may include a folding angle detection sensor, a pressure sensor, a gyroscope sensor, a barometric pressure sensor,
a magnetic sensor, an acceleration sensor, a distance sensor, an optical proximity sensor, a fingerprint sensor, a temperature sensor, a touch sensor, an ambient light sensor, a bone conduction sensor, and the like.

It should be noted that, in this embodiment of this application, the display screen of the electronic device using the image display method provided in this embodiment of this application belongs to a screen type that supports source chip (Source IC) refresh interrupt. The Source IC refresh interrupt is as follows: A Source IC of the display screen in a non-refresh state may be interrupted (referred to as Source refresh interrupt) by a driver at any time, so as to re-enter the refresh state to start operating. Work performed by the Source IC in the refresh state may be: refreshing display data of an image, so that the display screen starts to display the image, or switching a refresh rate of the display screen in response to a frame switching instruction.

For example, the display screen of the electronic device may be a display screen that uses a low temperature polysilicon oxide (low temperature polysilicon oxide, LTPO) transistor, so as to support Source IC refresh interrupt based on a characteristic of a relatively low leakage quantity of the LTPO. The display screen of the electronic device generally cannot be a display screen that uses a low temperature poly-silicon (low temperature poly-silicon, LTPS) transistor. Because as the leakage quantity of the transistor increases, the overall display effect of the display screen is severely affected even if the Source refresh interrupt can be further supported. Therefore, because the LTPS has a severe leakage characteristic, a display screen that uses the LTPS generally does not support a Source refresh interrupt function. Therefore, it may be understood that, Source refresh interrupt may be supported provided that the display screen of the electronic device uses a transistor having a characteristic of relatively low leakage quantity.

Based on different design requirements of an actual application, a transistor type that may be used by the display of the electronic device may certainly be another type other than LTPO. Regardless of a specific type of the transistor used by the display screen, or regardless of whether the transistor can support Source refresh interrupt due to having the characteristic of low leakage quantity, the display screen shall fall into the protection scope of the image display method provided in this embodiment of this application, provided that the display screen of the electronic device belongs to a screen type that supports source refresh interrupt.

In this embodiment of this application, a basic frequency supported by the display screen of the electronic device may be 60 hertz (Hz), 70 Hz, 75 Hz, 80 Hz, 90 Hz, 120 Hz, 360 Hz, or the like. A refresh rate (referred to as an image refresh rate or a display frame rate) at which the display screen performs image display is less than or equal to the basic frequency supported by the display screen. In addition, an image refresh rate supported by the display screen is generally less than or equal to 120 Hz. For example, the image refresh rate of the display screen may be generally configured as 60 hertz (Hz), 70 Hz, 75 Hz, 80 Hz, 90 Hz, or 120 Hz.

When the display screen supports the image refresh rate of 120 Hz, the image refresh rate of the display screen may be increased from 60 Hz, 70 Hz, 75 Hz, 80 Hz, or 90 Hz to 120 Hz, or decreased from 120 Hz to 90 Hz, 80 Hz, 75 Hz, 70 Hz, or 60 Hz. In this embodiment of this application, the image refresh rate of the electronic device is an image refresh rate currently used by the display screen of the electronic device. Therefore, in some feasible embodiments of this application, the image refresh rate of the electronic device or the image refresh rate of the display screen of the electronic device may also be referred to as a current refresh rate.

It should be noted that, in this embodiment of this application, the vertical synchronization (vertical synchronization, VSync) signal is a periodic discrete signal involved in a process that the electronic device uses the VSync technology. That is, there is a VSync signal triggered by a hardware driver at an interval of one VSync period (which may also be referred to as a refresh period or refresh duration).

It should be noted that, in this embodiment of this application, the VSync signal is used to trigger hardware to refresh a displayed image frame. The VSync signal may be triggered and generated by the display screen and fed back to an APP, a modem processor, a GPU, an ISP, a controller, and the like. Therefore, the VSync signal may also be considered as a tearing effect (tearing effect, TE) signal fed back from the display screen 194 to the processor 110.

In this embodiment of this application, when the display screen supports the basic frequency of 360 Hz, the display screen may be controlled by the image display driver in the electronic device to adaptively switch a frequency of outputting a VSync signal to 60 Hz, 90 Hz, 120 Hz, or 360 Hz, so that VSync signals with different VSync periods are triggered and output at different moments.

The VSync signal may have different names in different systems or architectures. For example, in some systems or architectures, the VSync signal may be specifically VSYNC_APP, or may be VSYNC_SF or VSYNC_HW. Regardless of the name of the VSync signal, the VSync signal shall fall within the protection scope of this application provided that the VSync signal is a synchronization signal with similar functions and conforms to the technical idea of the method provided in this embodiment of this application. In addition, the VSync signal may also have different definitions in different systems or architectures. Regardless of the definition of the VSync signal, the VSync signal shall fall within the protection scope of this application provided that the VSync signal is a synchronization signal with similar functions and conforms to the technical idea of the method provided in this embodiment of this application.

It should be noted that, a software system of the electronic device may use a layered architecture, an event-driven architecture, a microkernel architecture, a microservice architecture, or a cloud architecture. For ease of understanding, in this embodiment of this application, an Android system with a layered architecture is used as an example to describe in detail the image display method provided in this embodiment of this application applied to the electronic device.

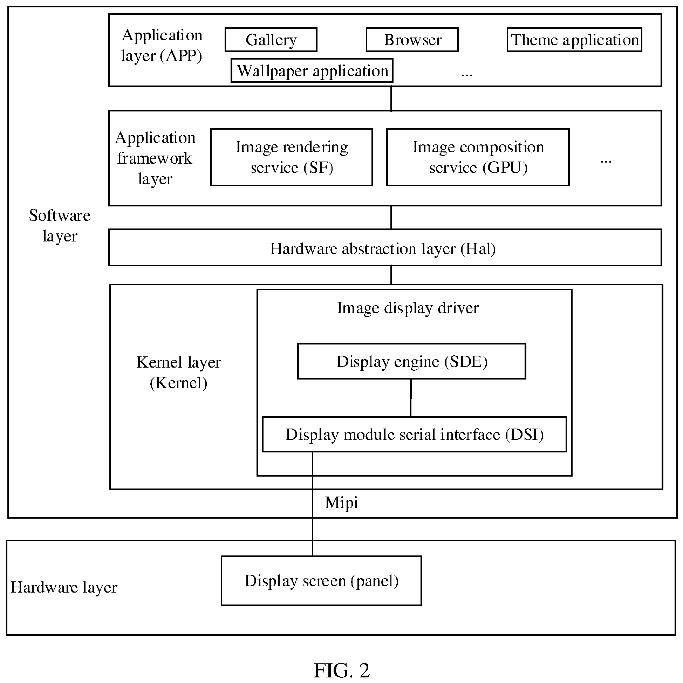

With reference to FIG. 2, the following uses an example in which an electronic device sends an image to (or write an image into) a display screen for display in response to a VSync signal, to describe a software and hardware processing procedure of the electronic device of an Android system in this process.

As shown in FIG. 2, a software and hardware architecture of the electronic device uses a layered design. A software layer includes an application layer (Application Layer, APP Layer), an application framework layer (Application Framework Layer, FWK Layer), a hardware abstraction layer (Hardware Abstraction Layer, HAL), and a kernel layer (Kernel Layer). A hardware layer includes a display screen (panel). The application layer may include various application programs that run in the electronic device, such as a gallery, a browser, a theme application, and a wallpaper application. The application framework layer mainly relates to a graphics processing service, for example, an image rendering service (surface flinger, SF) configured to render a to-be-displayed image provided by an application, and an image composition service (GPU) configured to perform composition processing on a plurality of layers of the to-be-displayed image. The kernel layer mainly includes an image display driver. The image display driver is mainly configured to send, to the display screen, the to-be-displayed image that is processed and delivered by a system upper layer (another system layer above the kernel layer at which the image display driver is located, such as the application layer, the application framework layer, and the hardware abstraction layer). The hardware layer mainly includes the display screen (panel) that is invoked by the image display driver to refresh and display the to-be-displayed image.

In a processing procedure in which the electronic device displays an image, VSync alignment may be performed between the APP and the SF, and between the SF and the driver, or VSync alignment may not be performed. If VSync alignment is not performed between the APP and the SF, and between the SF and the driver, hand-following performance of the electronic device may be further improved. Subsequently, an example in which VSync alignment is not performed between the APP and the SF, and between the SF and the driver is used for description.

In the system framework of the electronic device shown in FIG. 2, an application program APP such as a gallery, a browser, a theme application, or a wallpaper application of the application layer draws an image, and then the APP sends the drawn image to the application framework layer, so that the SF and the GPU in the application framework layer separately perform image rendering and layer composition processing on the drawn image to obtain display data of the to-be-displayed image, and transfer the display data of the to-be-displayed image to the image display driver at the kernel layer through the hardware abstraction layer. Further, the image display driver invokes a display module serial interface (display serial interface, DSI) by using a smart display engine (smart display engine, SDE) in response to a new VSync signal, and writes the display data of the to-be-displayed image into a display driver chip (display driver integrated circuit, DDIC) of the display screen. The DDIC of the display screen may store the image data sent by the software side for display in a buffer (buffer), so as to control the display panel to complete refreshing and display (display) of the image by scanning (or reading) the display data in the buffer.

For a scenario in which extreme hand-following performance is pursued, VSync alignment may not be performed between the APP and the SF, and between the SF and the driver. In this case, the demand is that after a frame of image is drawn from the APP, the image can be displayed on the display screen most quickly.

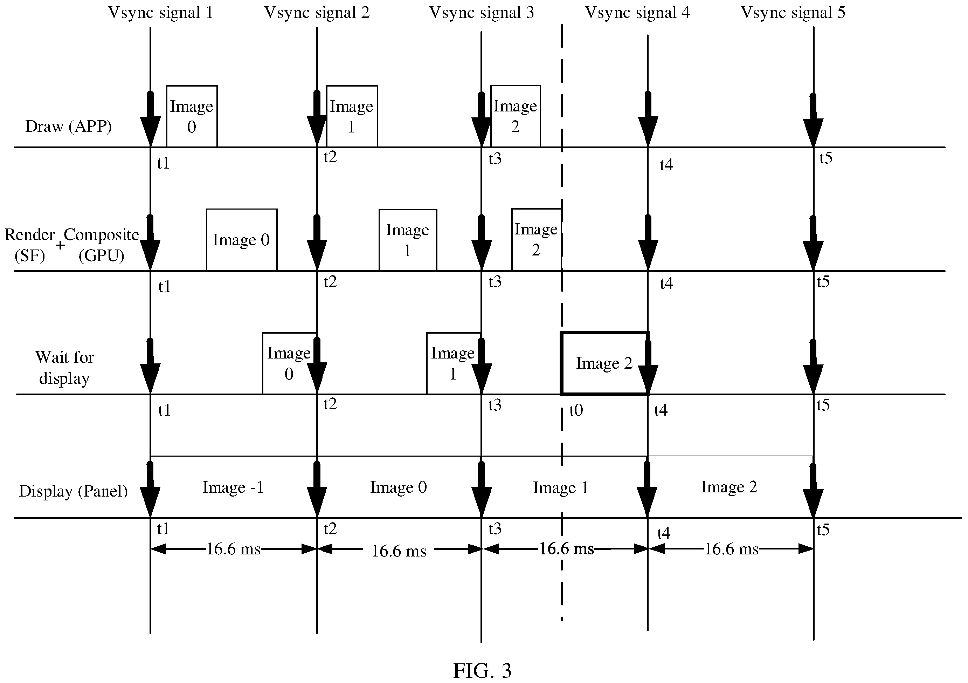

In a game scenario in which a frame rate is 60 Hz, as shown in FIG. 3, the DDIC of the display screen of the electronic device supports the image refresh rate of 60 Hz. In this case, when the DDIC refreshes and outputs a vertical synchronization signal at the frequency of 60 Hz, a VSync period of the output vertical synchronization signal is approximately 16.6 ms, and therefore, display duration of an image displayed by the display screen is also approximately 16.6 ms.

At a moment t1, the display screen starts to display an image -1 for a period of 16.6 ms in response to a VSync signal 1. In a display process of the image -1, the APP at the application layer of the electronic device starts to draw an image 0. After drawing of the image 0 is completed, the SF at the application framework layer of the electronic device renders, by using a rendering service render server (which may also be referred to as a render thread), the image 0 that is drawn by the APP, and further delivers the image 0 to the GPU after the SF completes rendering of the image 0, so that the GPU immediately starts to perform layer composition processing on the image 0 after receiving the image 0. Then, the image 0 is delivered to the image display driver after being composited. At a moment t2, the image display driver writes display data of the image 0 into the display screen in response to a VSync signal 2 output by the display screen, so that the display screen refreshes and displays the image 0 at the moment t2 until a moment t3.

After the moment t2, the APP at the application layer of the electronic device starts to draw an image 1. After drawing of the image 1 is completed, the SF renders the image 1 delivered by the APP, and further delivers the image 1 to the GPU after the SF completes rendering of the image 1, so that the GPU starts to perform layer composition processing on the image 1 after receiving the image 1. In this case, because the GPU may synchronously deliver display data of the image 1 to the image display driver at the system kernel layer of the electronic device after completing composition of the image 1 (that is, a moment at which the GPU completes composition of the image indicates that the image display driver receives the display data of the composited image 1), after the GPU completes composition of the image 1 before the moment t3, and delivers the image 1 to the image display driver, the image display driver writes the display data of the image 1 into the display screen at the moment t3 in response to a VSync signal 3, so that the display screen refreshes and displays the image 1 at the moment t3.

After the moment t3, in a process in which the display screen displays the image 1, the APP starts to draw an image 2. After drawing of the image 2 is completed, the SF renders the image 2 delivered by the APP, and further delivers the image 2 to the GPU after the SF completes rendering of the image 2, so that the GPU starts to perform layer composition processing on the image 2 after receiving the image 2. It may be learned from FIG. 3 that composition of the image 2 has been completed at a moment t0, and the GPU synchronously delivers the display data of the image 1 to the image display driver at the system kernel layer of the electronic device. In this case, the image display driver waits from the moment t0 to a moment t4, and the display screen generates a VSync signal 4. The image display driver writes display data of the image 2 into the display screen at the moment t4 in response to the VSync signal 4, so that the display screen refreshes and displays the image 2 at the moment t4.

At a moment t5, because the APP has completed an original image display requirement of the electronic device before the moment t5, no new image is drawn, and the electronic device does not generate a new image display requirement from the moment t4 to the moment t5, the display screen does not continue to perform image refresh and display after ending display of the image 2 at the moment t5. In this case, the display screen enters a sleep or screen-off state.

With reference to the foregoing, after the display data of the image 2 is ready, that is, after drawing of the image 2 by the APP, rendering of the image 2 by the SF, and composition processing of the image 2 by the GPU are completed, duration of waiting for arrival of a next VSync signal (the VSync signal 4) in the image display driver is relatively long, and the image 2 cannot be displayed on the display screen more quickly.

Therefore, in a game scenario in which high hand-following performance is pursued, if a frame of image can only be displayed on the display screen after relatively long waiting duration after display data of a frame of image is ready, interaction operations of a user on an interface cannot be responded to in a timely manner. Consequently, hand-following performance is relatively poor, and game experience of the user is affected.

To improve hand-following performance of the electronic device, this application provides an image display method, so as to reduce duration of waiting for a next VSync signal after display data of an image is ready, thereby improving hand-following performance of the electronic device.

It should be noted that the method provided in this embodiment of this application may be considered as a separate improvement on the foregoing solution for adjusting software control logic of the system upper layer (such as the application layer, the application framework layer, or the hardware abstraction layer) of the electronic device, or may be considered as a further optimization supplement to the solution for adjusting software control logic. That is, the image display method provided in this embodiment of this application is separately improved at a system software control level of the electronic device. In addition, the method provided in this embodiment of this application is further creatively improved at a system hardware level. Therefore, with reference to improvement on two levels of system software and hardware, duration of waiting for display after display data of an image is ready is further reduced, and hand-following performance is greatly improved.

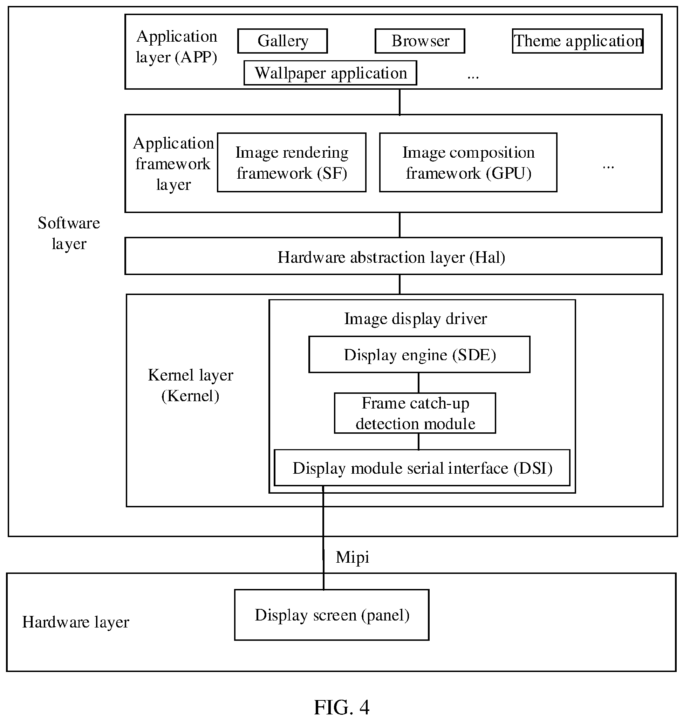

In a feasible implementation of this embodiment of this application, as shown in FIG. 4, in the method provided in this embodiment of this application, a frame catch-up detection module may be added to the system kernel layer of the electronic device to detect whether display data of an image is ready. Based on this, in a case in which the frame catch-up detection module detects that the display data of the image is ready, the image display driver of the electronic device immediately increases a frequency of outputting a VSync signal by the display screen, and advances a moment at which the VSync signal is generated, so that the display screen is driven to display the frame of image at an advanced moment in response to the frequency-increased VSync signal. That is, in the method provided in this embodiment of this application, the display screen can quickly display a next frame of image when display data of the image is ready, unlike a conventional solution in which the display screen needs to display a next frame of image after display of a previous frame of image for display duration corresponding to a corresponding VSync period is completed. In this way, duration of sending an image to the display screen by the image display driver may be effectively shortened, and a response speed of the electronic device to an interactive operation performed by the user on the display screen is increased, thereby improving hand-following performance of the electronic device. The frame catch-up herein may be understood as advancing a moment at which the image display driver of the electronic device generates a VSync signal by specified duration.

**In** the method provided in this embodiment of this application, the frame catch-up detection module is configured in the image display driver at the system kernel layer of the electronic device, so as to improve comprehensiveness of detecting whether display data of an image is ready, and improve accuracy of enabling the image display driver to immediately send a next frame of image for display by increasing a frequency of outputting a VSync signal and advancing a moment at which a frequency of a next VSync signal is output.

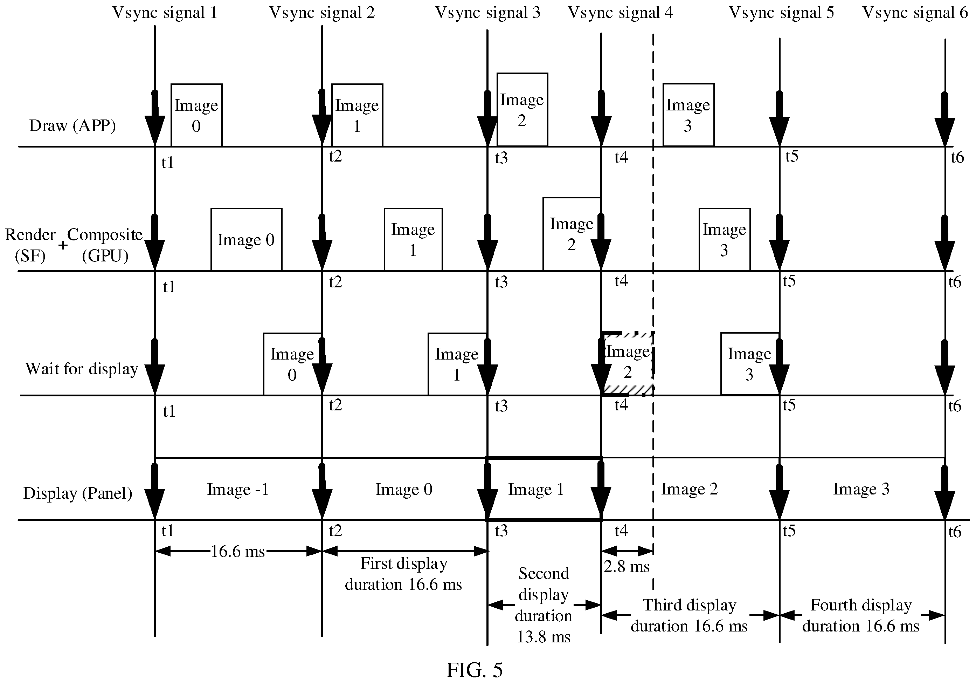

Next, with reference to FIG. 5, a feasible specific implementation of the image display method provided in this embodiment of this application is described.

As shown in FIG. 5, in a game scenario in which a frame rate is 60 Hz, in a process in which the display screen (supporting a basic frequency of 360 Hz) of the electronic device refreshes and displays an image based on a current refresh rate of 120 Hz, if a phenomenon that waiting duration is required before a moment at which a next VSync signal is generated is reached after display data of an image 2 is ready (composition is completed) occurs, according to the image display method provided in this embodiment of this application, when a hardware module, that is, the frame catch-up detection module that is newly added to the system kernel layer of the electronic device detects and recognizes that the display data of the image 2 is ready (composition is completed), the image display driver of the electronic device increases a frequency of outputting a VSync signal by the display screen to 360 Hz at the moment t4 in response to the display data of the image 2 being ready, and outputs a VSync signal 4 at the moment t4.

It may be understood that, because a maximum frequency of outputting a VSync signal by the display screen of the electronic device is 360 Hz, and a corresponding Vsync period is 2.8 ms, in FIG. 5, a difference between a moment (t4) corresponding to readiness of the display data of the image 2 and a moment at which the display screen originally needs to output a next VSync signal is 2.8 ms. Therefore, the image display driver of the electronic device may advance a moment at which the display screen outputs a next VSync signal by 2.8 ms, that is, the display screen outputs a frequency-increased VSync signal 4 at the moment t4 (a corresponding Vsync period is 2.8 ms). The image display driver that is at the system kernel layer and that is used to drive the display screen may write the received display data of the image 2 into the display screen at the moment t4 in response to the VSync signal 4 after receiving the VSync signal 4. In this way, the display screen can start to display the image 2 immediately after the display data of the image 2 is ready, thereby reducing duration of waiting for a next VSync signal after the display data of the image 2 is ready.

In some feasible embodiments, a moment corresponding to readiness of the display data of the image 2 may be earlier, that is, duration between the moment and a moment at which the display screen originally needs to output a next VSync signal is greater than 2.8 ms.

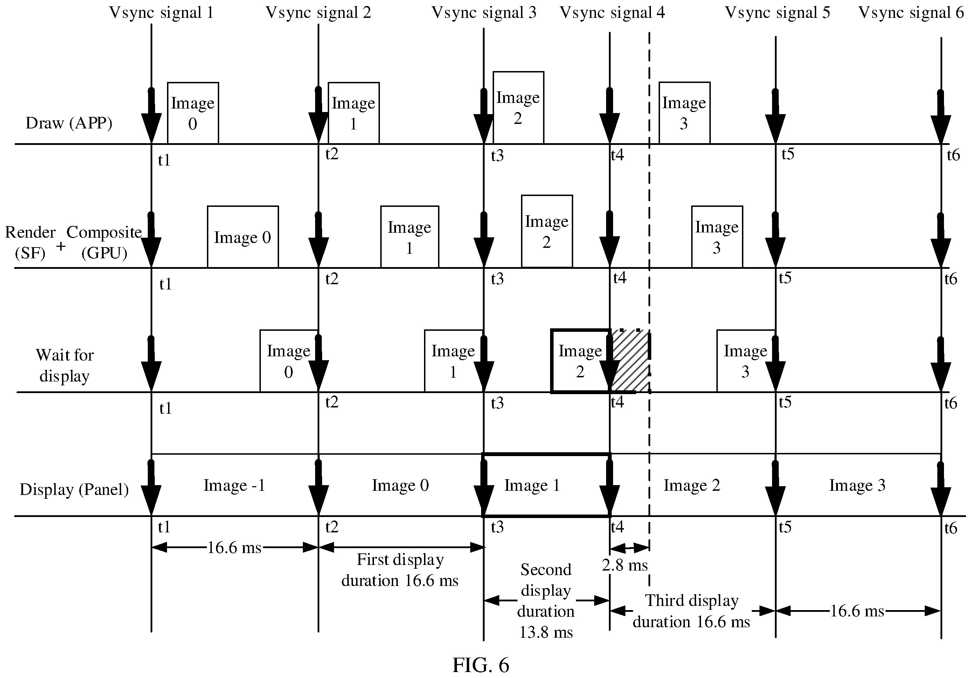

As shown in FIG. 6, in a game scenario in which a frame rate is 60 Hz, in a process in which the display screen (supporting a basic frequency of 360 Hz) of the electronic device refreshes and displays an image at a current refresh rate of 120 Hz, if a phenomenon that duration of waiting for a next VSync signal after the display data of the image 2 is ready (composition is completed) exceeds 2.8 ms occurs, according to the image display method provided in this embodiment of this application, after a hardware module, that is, the frame catch-up detection module that is newly added to the system kernel layer of the electronic device detects that duration of waiting for a next VSync signal after the display data of the image 2 is ready (composition is completed) exceeds 2.8 ms, the image display driver of the electronic device increases a frequency of outputting a VSync signal by the display screen to 360 Hz, and advances a moment that the display screen outputs a next VSync signal by 2.8 ms. Therefore, the display screen outputs a frequency-increased VSync signal 4 (a corresponding Vsync period is 2.8 ms) at a moment t4, and the image display driver that is at the system kernel layer and that is configured to drive the display screen may write the received display data of the image 2 into the display screen at the moment t4 in response to the VSync signal 4 after receiving the VSync signal 4. In this way, the display screen may start to display the image 2 at the moment t4, thereby shortening duration of waiting for a next VSync signal after the display data of the image 2 is ready.

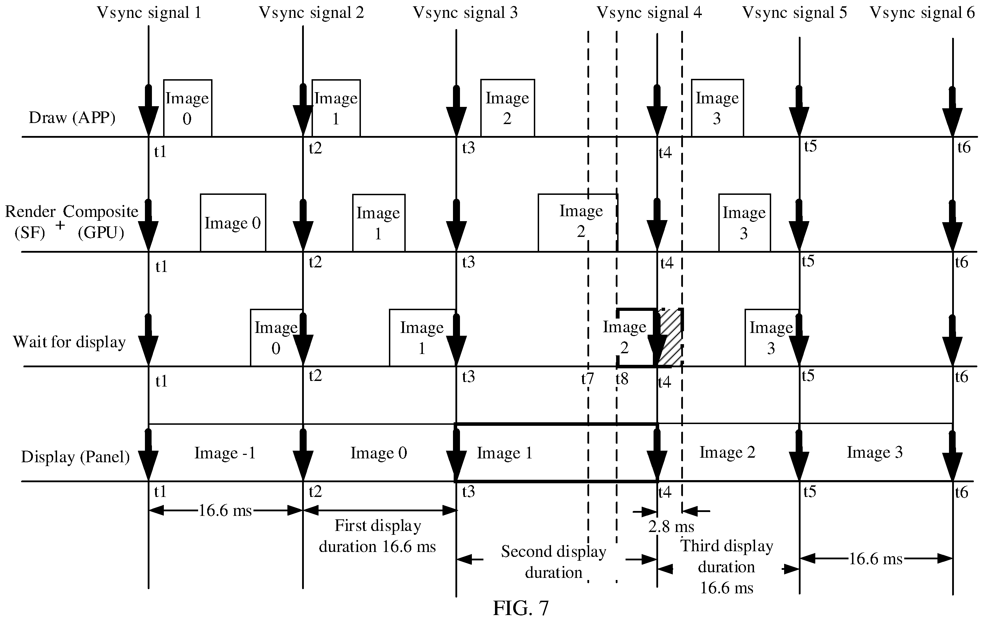

As shown in FIG. 7, in a game scenario in which a frame rate is 60 Hz, in a process in which the display screen (supporting a basic frequency of 360 Hz) of the electronic device refreshes and displays an image at a current refresh rate of 120 Hz, composition processing of an image 2 by the GPU at the system application framework layer exceeds 16.6 ms, that is, exceeds a moment t7, and a moment at which the GPU completes composition processing of the image 2 is t8. In this case, the GPU will deliver display data of the image 2 to the image display driver at the kernel layer after the moment t8, so that the image display driver misses a VSync signal generated at the moment t7 and thus fail to send an image to the display screen at the moment t7. Therefore, a phenomenon that the display screen performs timeout display on the image 1 occurs. In view of this phenomenon, in the image display method provided in this embodiment of this application, when the electronic device detects, by using the frame catch-up detection module, that duration of waiting for a next VSync signal after the display data of the image 2 is ready exceeds 2.8 ms, a frequency of outputting a VSync signal by the display screen is increased to 360 Hz, and a moment at which the display screen outputs a next VSync signal is advanced by 2.8 ms. Therefore, the display screen may output a frequency-increased VSync signal 4 (a corresponding Vsync period is 2.8 ms) at a moment t4. The image display driver, at the moment t4, writes the display data that is of the image 2 and that has been composited and delivered by the GPU to the image display driver before the moment t4 into the display screen in response to the VSync signal 4, so that the display screen can start to display the image 2 at the moment t4, thereby shortening duration of waiting for a next VSync signal after the display data of the image 2 is ready, and shortening display timeout duration of the image 1.

Compared with a conventional solution, in the image display method provided in this embodiment of this application, by using the newly added frame catch-up detection module, when it is discovered that display data of an image of the electronic device is ready, the display screen increases a frequency of outputting a VSync signal by the display screen, and advances a moment at which a VSync signal is output by specified duration, so that the image display driver immediately sends an image for display based on a frequency-increased VSync signal at the advanced moment. In this way, the display screen may be different from that in a conventional solution in which when a frame rate of 120 hz is used at each driver layer (a corresponding one VSync period is 8.3 ms), duration of waiting for a next VSync signal after display data of an image is ready exceeds specified duration (for example, 2.8 ms), and the image display driver writes the image into the display screen for display, which causes a problem that the image cannot be quickly displayed, and hand-following performance is relatively low. In this embodiment of this application, a frequency of outputting a VSync signal by the display screen may be increased, and a moment at which a VSync signal is output by the display screen may be advanced, so that an image is written into the display screen in advance based on a frequency-increased VSync signal, thereby quickly displaying a next frame of image by the display screen and improving hand-following performance. Therefore, in this application, after display data of an image is ready, a moment at which a next VSync signal is generated is advanced, to display the frame of image in a timely manner, thereby improving hand-following performance of the electronic device.

Based on the overall overview of the image display method provided in the foregoing embodiments of this application, the following describes the specific embodiments of the image display method provided in the embodiments of this application sequentially.

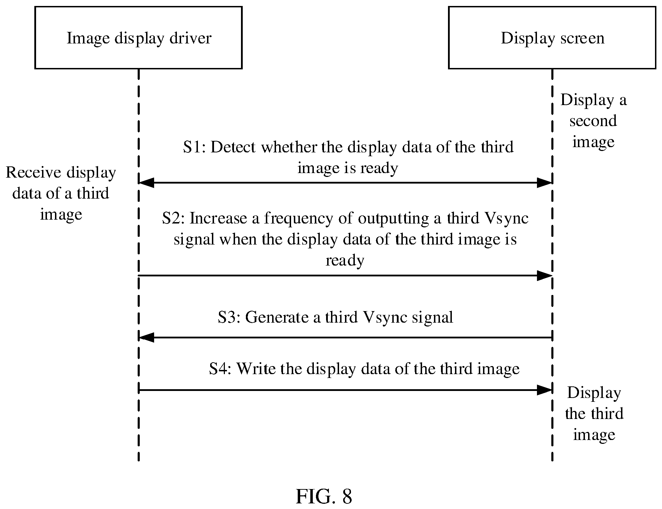

Referring to FIG. 8, FIG. 8 is a schematic flowchart of an image display method according to an embodiment of this application in a specific implementation. It should be understood that although FIG. 8 shows some execution sequences of method steps, the image display method provided in this embodiment of this application may certainly use an execution sequence of method steps different from that shown in the figure based on different design requirements of an actual application. That is, the sequence of the method steps shown in FIG. 8 does not constitute a limitation on an execution logical sequence of the image display method provided in this embodiment of this application. Any other reasonable change based on the sequence of the method steps shown in FIG. 8 should be included in the protection scope of the image display method provided in this embodiment of this application.

In a feasible embodiment of the image display method provided in this embodiment of this application, when the image display method is performed by an electronic device, at a first moment, the electronic device generates a first Vsync signal, and in response to the first Vsync signal, a display screen of the electronic device starts to display a first image. At a second moment that is after the first moment, the electronic device generates a second Vsync signal. In response to the second Vsync signal, the display screen starts to display a second image. At a third moment that is after the second moment, the electronic device generates a third Vsync signal in response to readiness of display data of the second image.

It should be noted that, in this embodiment of this application, the first Vsync signal generated by the electronic device at the first moment corresponds to a first Vsync period, and the first Vsync period corresponds to first display duration of the first image, that is, the first VSync period is equal to the first display duration. The second Vsync signal generated by the electronic device at the second moment corresponds to a second Vsync period, and the second Vsync period is equal to the first Vsync period. The third Vsync signal generated by the electronic device at the third moment corresponds to a third Vsync period, and the third Vsync period is less than the first Vsync period.

In this embodiment of this application, a smaller Vsync period indicates a higher frequency of outputting a Vsync signal. That the electronic device generates the third Vsync signal at the third moment in response to readiness of display data of the third image may be as follows: The electronic device controls, by using an image display driver of the electronic device, the display screen to increase a frequency of triggering a Vsync signal when the display data of the third image is ready, so that the display screen outputs, at the third moment, a frequency-increased third Vsync signal at the increased frequency.

In this embodiment of this application, by generating the third Vsync signal at the third moment, the display screen may start to display the third image within extremely short duration of waiting for a Vsync signal after the display data of the third image is ready.

In a feasible embodiment, for a specific process in which the electronic device controls, by using the image display driver, the display screen to advance a moment at which a Vsync signal is generated, and increase a frequency of triggering a Vsync signal, and the electronic device generates the third Vsync signal at the third moment, refer to S1 to S3 shown in FIG. 8.

S1: Detect whether the display data of the third image is ready.

In this embodiment of this application, after the display screen displays the second image at the second moment in response to the second Vsync signal, the image display driver of the electronic device detects, in real time, whether the display data of the third image is ready.

It should be noted that, in this embodiment of this application, the second image displayed by the display screen is a next frame of image of the first image displayed by the display screen.

For example, when the display screen refreshes and displays an image at a current refresh rate of 60 Hz, and triggers the first Vsync signal at the first moment by using the frequency of 60 Hz as a frequency of triggering a Vsync signal, a first Vsync period corresponding to the first Vsync signal is approximately 1/60≈16.6 ms, that is, the display screen triggers one first Vsync signal at an interval of 16.6 ms. In this case, first display duration corresponding to the first Vsync period is also approximately 16.6 ms, that is, the display screen refreshes and displays one frame of image at an interval of approximately 16.6 ms. The display screen displays the second image in response to the second Vsync signal at the second moment. In a process in which the display screen displays the second image, it is detected whether the display data of the third image is ready.

Because the second Vsync period is equal to the first Vsync period, after the display screen displays the second image at the second moment in response to the second Vsync signal, normally, second display duration for which the display screen continuously displays the second image is also approximately 16.6 ms, and a moment at which display of the second image ends may be recorded as a moment 1, that is, a moment at which a next Vsync signal is to be generated. In this case, before the moment 1, the image display driver of the electronic device detects whether the display data of the third image is ready.

S2: Increase a frequency of outputting a third Vsync signal when the display data of the third image is ready.

In this embodiment of this application, in a process in which the display screen displays the second image, when it is detected that the display data of the third image is ready, the image display driver of the electronic device controls the display screen to increase a frequency of outputting a Vsync signal, and generate a third Vsync signal.

For example, in a process in which the display screen displays the second image by using a current refresh rate of 60 Hz as a frequency of outputting a Vsync signal, the image display driver of the electronic device detects that the display data of the third image is ready, and a moment at which the display data of the third image is ready is recorded as a moment 2. The moment 2 is before the moment 1. If duration between the moment 2 and the moment 1 is greater than or equal to specified duration, the specified duration may be a period that corresponds to a maximum refresh rate of 360Hz of the electronic device and that is approximately 1/360≈2.8 ms. That is, if the duration between the moment 2 and the moment 1 is greater than or equal to 2.8 ms, the image display driver of the electronic device delivers a control instruction to the display screen to increase a currently used frequency of 60 Hz of outputting a Vsync signal, so that the display screen can be controlled to generate a third Vsync signal at a moment that is 2.8 ms before the moment 1.

If the duration between the moment 2 and the moment 1 is less than 2.8 ms, the image display driver of the electronic device delivers a control instruction to the display screen to control the display screen to generate a third Vsync signal at the moment 1. In addition, the image display driver may also control the display screen to increase a currently used frequency of 60 Hz of outputting a Vsync signal.

In some other examples, if the duration between the moment 2 and the moment 1 is less than 2.8 ms, the image display driver of the electronic device may not deliver a control instruction to the display screen, and the display screen generates a third Vsync signal at the moment 1.

S3: Generate a third Vsync signal.

In this embodiment of this application, if the duration between the moment 2 and the moment 1 is greater than or equal to 2.8 ms, the third moment is a moment that is 2.8 ms before the moment 1. If the duration between the moment 2 and the moment 1 is less than 2.8 ms, the third moment is the moment 1. At the third moment, the image display driver of the electronic device outputs a frequency-increased third Vsync signal to the image display driver and another software and hardware module.

It should be noted that, in this embodiment of this application, because a higher frequency of outputting a Vsync signal results in a smaller Vsync period, a third Vsync period corresponding to a third Vsync signal triggered at the third moment after the display screen increases a frequency of outputting a Vsync signal is less than the first Vsync period, and is also less than the second Vsync period (the display screen has not increased a frequency of outputting a Vsync signal when outputting the first Vsync signal at the first moment and outputting the second Vsync signal at the second moment).

For example, after the electronic device controls the display screen to increase the currently used frequency of 60 Hz of outputting a Vsync signal to 360 Hz, the display screen outputs the first frequency-increased third Vsync signal after approximately 2.8 ms after the frequency of outputting a Vsync signal is increased based on a Vsync period 1/360≈2.8 ms corresponding to the increased frequency of 360 Hz. In this case, the third Vsync period corresponding to the third Vsync signal is approximately 2.8 ms, and is less than the first Vsync period that is approximately 16.6 ms.

In a feasible embodiment, for a specific process in which the display screen displays the next frame of image of the second image in response to the third Vsync signal, further refer to S4 shown in FIG. 8.

S4: Write the display data of the third image.

It should be noted that, in this embodiment of this application, the third image is a next frame of image of the second image.

In this embodiment of this application, the display screen displays the third image in response to the electronic device generating the third Vsync signal at the third moment. That is, after receiving the display data that is of the third image and that is sent by the system upper layer, the image display driver of the electronic device writes the display data of the third image into the display screen in response to the display screen outputting the frequency-increased third Vsync signal at the third moment, so that the display screen displays the third image at the third moment.

For example, assuming that the display screen of the electronic device supports a basic frequency of 360 Hz, in a process that the display screen displays an image by using image display duration of 16.6 ms corresponding to the current refresh rate of 60 Hz, the display screen uses the frequency of 60 Hz as a frequency of outputting a Vsync signal. After the display screen starts to display the second image at the second moment in response to the second Vsync signal, the image display driver of the electronic device detects whether the display data of the third image is ready. Therefore, when detecting that the display data of the third image is ready, the image display driver controls the display screen to enable a preset 360 Hz-TE high-frequency synchronization solution, so as to control the display screen to increase a frequency of outputting a Vsync signal to 360 Hz. In this way, the display screen outputs, at the third moment, the frequency-increased third Vsync signal based on the Vsync period 1/360≈2.8 ms corresponding to the frequency of 360 Hz. After receiving the third Vsync signal, the image display driver writes the display data of the third image that is sent by the system upper layer before the third moment into the display screen in response to the third Vsync signal. In this way, the display screen starts to refresh and display the third image at the third moment. In this case, duration of waiting for a next VSync signal is extremely short after the display data of the third image is ready, and does not exceed 2.8 ms.

In some other feasible embodiments, if duration between a moment at which the display data of the third image is ready and the moment 1 is exactly equal to 2.8 ms, the moment at which the display data of the third image is ready is the third moment. In this case, the display screen starts to refresh and display the third image at the moment at which the display data of the third image is ready, and a process of waiting for display of the third image does not exist.

It should be noted that, in this embodiment of this application, the 360 Hz-TE high-frequency synchronization solution may be a Vsync signal output control solution that is pre-added to the display screen such that the display screen performs switching on frequencies of outputting a Vsync signal based on a requirement. It should be understood that, based on different design requirements of an actual application, certainly, another Vsync signal output control solution of a same type but different frequencies may be pre-added to the display screen, for example, a 60 Hz-TE low-frequency synchronization solution and a 120 Hz-TE standard-frequency synchronization solution.

When responding to enabling of a specific-frequency synchronization solution, the display screen outputs a Vsync signal based on a Vsync period corresponding to the frequency. When responding to enabling of the 360 Hz-TE high-frequency synchronization solution, the display screen outputs a Vsync signal at an interval of 2.8 ms by using a Vsync period of 2.8 ms corresponding to the frequency of 360 Hz. When responding to enabling of the 120 Hz-TE standard-frequency synchronization solution, the display screen outputs a Vsync signal at an interval of 8.3 ms by using a Vsync period of 8.3 ms corresponding to the frequency of 120 Hz. When responding to enabling of the 60 Hz-TE low-frequency synchronization solution, the display screen outputs a Vsync signal at an interval of 16.6 ms by using a Vsync period of 16.6 ms corresponding to the frequency of 60 Hz.

In this embodiment of this application, when the display screen of the electronic device refreshes and displays an image at a current refresh rate of 60 Hz, a Vsync signal may be output at an original frequency of 60 Hz by using the 60 Hz-TE low-frequency synchronization solution by default.

Compared with a conventional solution in which the image refresh rate of 120 Hz is always used, in this embodiment of this application, when the 360 Hz-TE high-frequency synchronization solution is not enabled, an image refresh rate of 60 Hz is used, and a quantity of times that a 360 Hz-TE is actually enabled is approximately one third less than a quantity of times that a 120 Hz-TE is always enabled in the conventional solution. In this way, in this solution, duration of waiting for a Vsync signal after display data of an image is ready is shortened to a maximum extent, so as to reduce waste of power consumption while meeting a performance requirement for high hand-following performance.

**In** some other feasible embodiments, the electronic device may further detect, by using the image display driver, duration of waiting for a next Vsync signal after display data of a previous frame of image is ready. If the duration exceeds first specified duration, and duration of waiting for a next Vsync signal after display data of a current frame of image is ready exceeds second specified duration, the image display driver may control the display screen to increase a frequency of outputting a Vsync signal, and write the display data of the current frame of image into the display screen in response to a frequency-increased Vsync signal output by the display screen at this moment, so that the display screen starts to display the current frame of image at this moment.

**In** some examples, the first specified duration and the second specified duration may be equal, and are both 2.8 ms. In some other examples, the first specified duration and the second specified duration may alternatively be unequal. The first specified duration is 5.5 ms, and the second specified duration is 2.8 ms. In this application, the first specified duration and the second specified duration may be adjusted according to an actual situation, which is not limited.

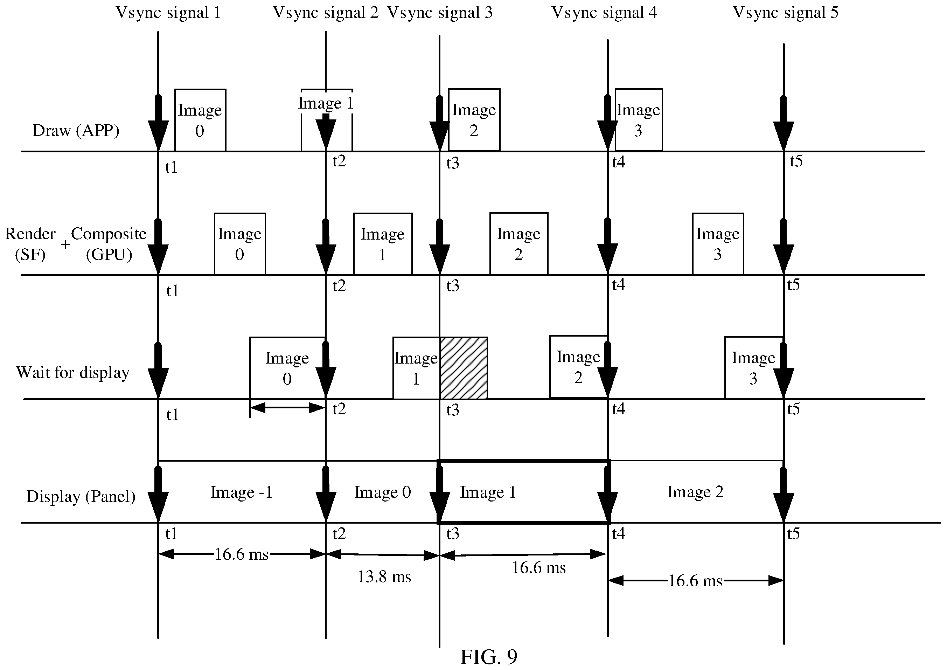

As shown in FIG. 9, in a process in which the display screen displays an image -1, the image display driver detects that display data of an image 0 is ready, and duration of waiting for a Vsync signal 2 exceeds 2.8 ms. Therefore, in a process in which the display screen starts to refresh and display the image 0 at a moment t2 in response to the Vsync signal 2, if the image display driver detects that duration of waiting for a next Vsync signal after display data of an image 1 is ready exceeds 2.8 ms, the image display driver increases a frequency of the next Vsync signal, and controls the display screen to output a Vsync signal 3 in advance by 2.8 ms. After receiving the Vsync signal 3, the image display driver writes display data of the image 1 that is sent by the system upper layer before the moment t3 into the display screen in response to the Vsync signal 3. In this way, the display screen starts to refresh and display the image 1 at the moment t3.

Therefore, the electronic device shortens duration of waiting for a next Vsync signal after display data of an image is ready, and increases a display speed of the image.

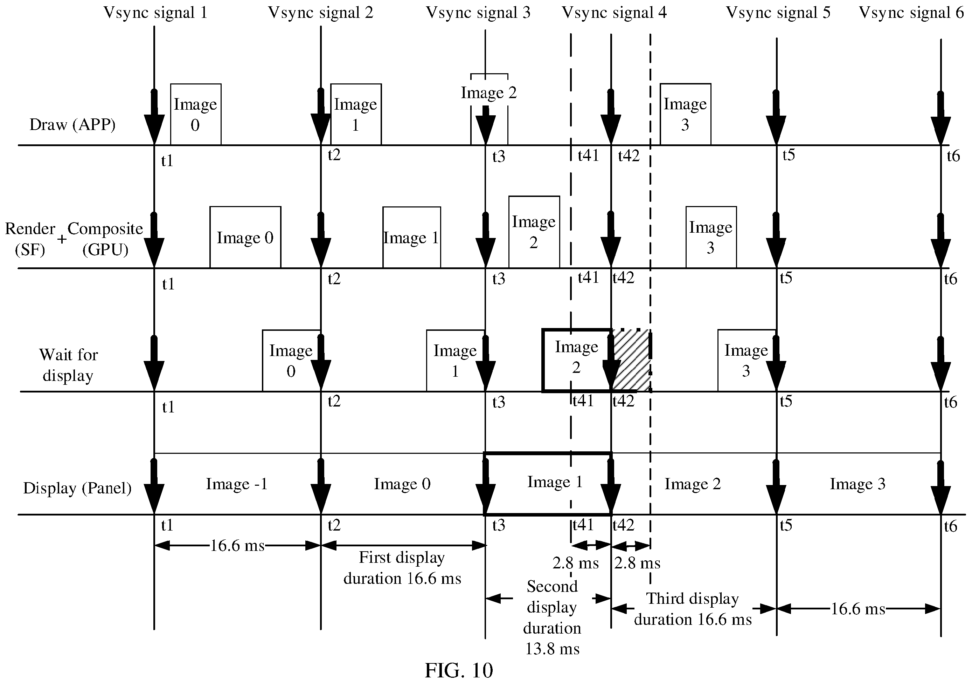

In some other feasible embodiments, as shown in FIG. 10, after reducing display duration of the image 0, the electronic device ensures that display duration of the image 1 is normal, that is, maintains the display duration as 16.6 ms. In this case, at a moment t4, the electronic device may disable a high-frequency synchronization signal of 360 Hz. Then, in a subsequent display process, duration of waiting for a next Vsync signal after display data of an image 3 is ready continues to be detected.

In some other feasible embodiments, if there is a case in which duration between a moment at which display data of an image 2 is ready and a moment at which a next VSync signal is to be generated exceeds two periods of 360 Hz, that is, exceeds 5.6 ms, in this application, a frequency of outputting a VSync signal may be increased to 360 Hz, and a next VSync signal may be output 2.8 ms in advance. As shown in FIG. 10, when a moment at which the display data of the image 2 is ready is before a moment t41, the image display driver may control the display screen to output a frequency-increased VSync signal 4 at a moment t42. Then, the image display driver writes the received display data of the image 2 into the display screen in response to the VSync signal 4 output at the t42 moment. In this way, the display screen may start to display the image 2 at the moment t42, which reduces duration of waiting for a next VSync signal after the display data of the image 2 is ready.

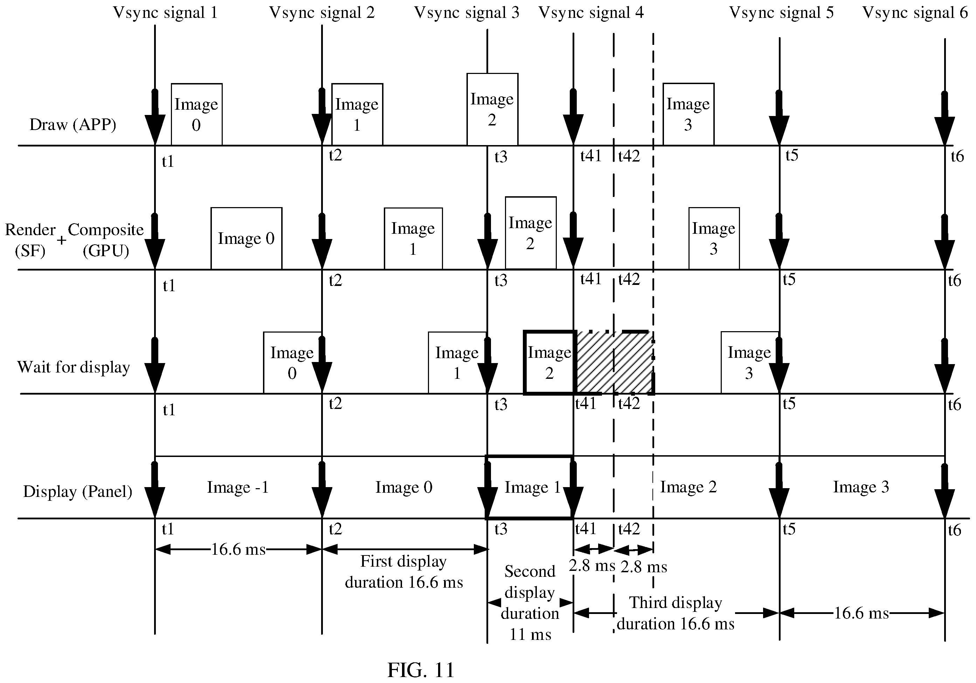

In some other feasible embodiments, if there is a case in which the duration between a moment at which the display data of the image 2 is ready and a moment at which a next VSync signal is to be generated exceeds two periods of 360 Hz, that is, exceeds 5.6 ms, in this application, a frequency of outputting a VSync signal may be increased to 360 Hz, and a next VSync signal may be output 5.6 ms in advance. As shown in FIG. 11, when a moment at which the display data of the image 2 is ready is before the moment t41, the image display driver may control the display screen to output a frequency-increased VSync signal 4 at the moment t41. Then, the image display driver writes the received display data of the image 2 into the display screen in response to the VSync signal 4 output at the t41 moment. In this way, the display screen may start to display the image 2 at the moment t41, which reduces duration of waiting for a next VSync signal after the display data of the image 2 is ready.

It may be understood that, an advanced moment corresponding to the display screen generating a next VSync signal may be related to a quantity of periods of 360 Hz that duration between a moment at which display data of an image is ready and a moment at which a next VSync signal is to be generated exceeds. For example, if the duration between a moment at which the display data of the image 2 is ready and a moment at which a next VSync signal is to be generated exceeds two periods of 360 Hz, the image display driver may control the display screen to output the frequency-increased VSync signal 4 in advance by 5.6 ms. If the duration between a moment at which the display data of the image 2 is ready and a moment at which a next VSync signal is to be generated exceeds one period of 360 Hz, the image display driver may control the display screen to output the frequency-increased VSync signal 4 in advance by 2.8 ms. To ensure a relatively small fluctuation in refresh rates of the electronic device, generally, even if there are two or more periods of 360 Hz that duration between a moment at which display data of an image is ready and a moment at which a next VSync signal is to be generated exceeds, the image display driver may control the display screen to output a frequency-increased VSync signal only 2.8 ms in advance.

In this embodiment of this application, for a case in which the electronic device determines whether to increase a frequency of a next VSync signal after display data of the current frame of image is ready by detecting, by using the image display driver, duration of waiting for a next Vsync signal after display data of the previous frame of image is ready, the duration of waiting for a next Vsync signal after the display data of the previous frame of image is ready is related to an advanced moment corresponding to the display screen generating a next VSync signal. The shorter the duration of waiting for a next Vsync signal after the display data of the previous frame of image is ready, the greater a jitter degree of the displayed image; and the longer the duration of waiting for a next Vsync signal after the display data of the previous frame of image is ready, the smaller the jitter degree of the displayed image. For example, when the duration of waiting for a next Vsync signal after the display data of the previous frame of image is ready is approximately 2.7 ms, a frequency of triggering frame catch-up is 100/600, and the jitter degree of the display image is greater. Average duration of waiting for a next Vsync signal after the display data of the image is ready is 4 ms. When the duration of waiting for a next Vsync signal after the display data of the previous frame of image is ready is approximately 5.4 ms, the frequency of triggering frame catch-up is 90/600. The average duration of waiting for a next Vsync signal after the display data of the image is ready is 6 ms. When the duration of waiting for a next Vsync signal after the display data of the image is ready is approximately 8.1 ms, the frequency of triggering frame catch-up is 80/600. The average duration of waiting for a next Vsync signal after the display data of the image is ready is 9 ms.

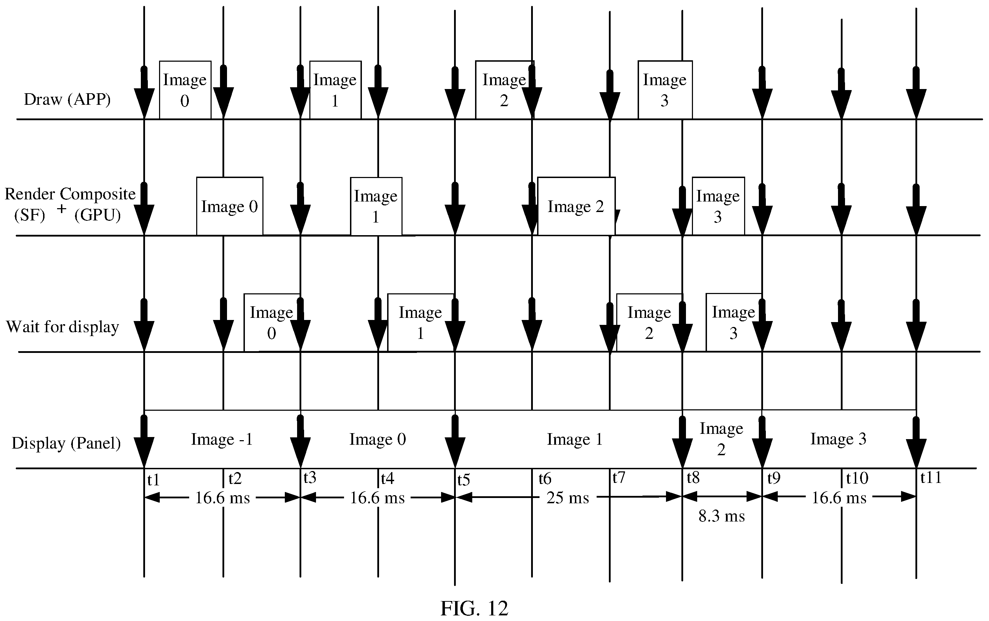

In the conventional solution, a frame rate of 120 hz is used at the driver layer. However, in a game scenario in which a frame rate is 60 Hz, when observed over an extended time period, the actual frame rate of the game engine is drawn as 60 Hz+, but a time interval between two frames or several frames is uncontrollable. Therefore, a case shown in FIG. 12 may occur. As shown in FIG. 12, the DDIC of the display screen of the electronic device supports an image refresh rate of 120 Hz. In this case, when the DDIC refreshes and outputs a vertical synchronization signal at the frequency of 120 Hz, a VSync period of the output vertical synchronization signal is approximately 8.3 ms. In this way, in a 60 Hz game scenario, generally, each image needs to be displayed for two VSync periods which are approximately 16.6 ms.

At a moment t1, the display screen starts to display an image -1 for a period of 16.6 ms. In a display process of the image -1, the APP at the application layer of the electronic device starts to draw an image 0, and the SF at the application framework layer of the electronic device renders, by using a rendering service render server (which may also be referred to as a render thread), the image 0 that is previously delivered by the APP, and further delivers the image 0 to the GPU after the SF completes rendering of the image 0, so that the GPU immediately starts to perform layer composition processing on the image 0 after receiving the image 0. Because a moment at which composition of the image 0 is completed exceeds t2, the image 0 waits until a moment t3 after composition, and display data of the image 0 is written into the display screen in response to a VSync signal output by the display screen, so that the display screen refreshes and displays the image 0 at the moment t3 until a moment t5.

The APP at the application layer of the electronic device starts to draw an image 1. The SF renders the image 1 delivered by the APP, and further delivers the image 1 to the GPU after the SF completes rendering of the image 1, so that the GPU starts to perform layer composition processing on the image 1 after receiving the image 1. In this case, because the GPU may synchronously deliver display data of the image 1 to the image display driver at the system kernel layer of the electronic device after completing composition of the image 1 (that is, a moment at which the GPU completes composition of the image indicates that the image display driver receives the display data of the composited image 1), after the GPU completes composition of the image 1 before the moment t5, and sends the image 1 to the image display driver, the image display driver writes the display data of the image 1 into the display screen at the moment t5 in response to the VSync signal, so that the display screen refreshes and displays the image 1 at the moment t5.

After the image 1 is displayed for 16.6 ms, that is, when reaches a moment t7, because a moment at which composition of the image 2 is completed is later than the moment t7, in this case, the image display driver fails to receive display data of the image 2 at the moment t7, and thus will not perform any image processing action until a next VSync signal arrives. In this case, the display screen continues to display the image 1, until a new VSync signal is generated at a moment t8. Therefore, a display length of the image 1 is 25 ms. In this case, composition of the image 2 is completed. Therefore, the display screen refreshes and displays the image 2 at the moment t8.

At a moment t9, a new VSync signal output by the display screen arrives. In this case, because the GPU completes composition of an image 3 before the moment t9, and delivers display data of the image 3 to the image display driver, the image display driver writes the display data of the image 3 into the display screen in response to the VSync signal at the moment t9. The display screen starts to refresh and display the image 3 at the moment t9 until a moment t11. Therefore, display duration of the image 2 is 8.3 ms, and display duration of the image 3 is 16.6 ms.

At the moment t11, because the APP completes an original image display requirement of the electronic device before the moment t11, no new image is drawn, and the electronic device does not generate a new image display requirement from the moment t9 to the moment t11, the display screen does not continue to perform image refresh and display after ending display of the image 3 at the moment t11. In this case, the display screen enters a sleep or screen-off state.

With reference to the foregoing description, the electronic device may encounter timeout (not shown in the figure) of image drawing by the APP at the application layer, which leads to timeout of image rendering by the SF at the application framework layer and timeout of image composition by the GPU at the application framework layer, encounter timeout of image rendering by the SF at the application framework layer, which leads to timeout of image composition by the GPU at the application framework layer, or encounter timeout of image composition by the GPU at the application framework layer, which leads to the image display driver at the kernel layer missing the VSync signal and failing to send an image to the display screen. Therefore, even if the electronic device uses the refresh rate of 120 Hz at the driver layer, the display screen needs to perform timeout display on an image that is being displayed for a period (8.3 ms) corresponding to the refresh rate of 120Hz.

Therefore, in the foregoing game scenario, the electronic device may encounter a case in which display data of a frame of image is generated slowly and display data of a next frame of image is generated quickly, which leads to display duration of a previous frame of image of the frame of image being too long, display duration of the frame of image being too short, and display duration of the next frame of image of the frame of image returning to normal. For example, in FIG. 12, when display data of the image 1 is generated slowly and display data of the image 2 is generated quickly, display duration of the image 1 is 25 ms, display duration of the image 2 is 8.3 ms, and display duration of the image 3 is 16.6 ms. That is, in this case, the display screen shows that the current refresh rate rises from 40 Hz to 120 Hz, and then drops directly from 120 Hz to 60 Hz. For a user, because human eyes are relatively sensitive to a fluctuation of a refresh rate, a current refresh rate of the display screen rising from 40 Hz to 120 Hz, and then dropping directly from 120 Hz to 60 Hz will result in a noticeable visual jitter in a displayed picture.

To improve hand-following performance of the electronic device and reduce the actual jitter caused by fluctuations in frame rates during actual stuttering, this application provides the image display method, so as to reduce duration of waiting for a next VSync signal after display data of an image is ready, and ensure that a high-frequency TE signal is disabled during duration that the current refresh rate continues in the next frame, thereby making the jitter in the displayed picture of the device less noticeable to the user while improving hand-following performance of the electronic device.

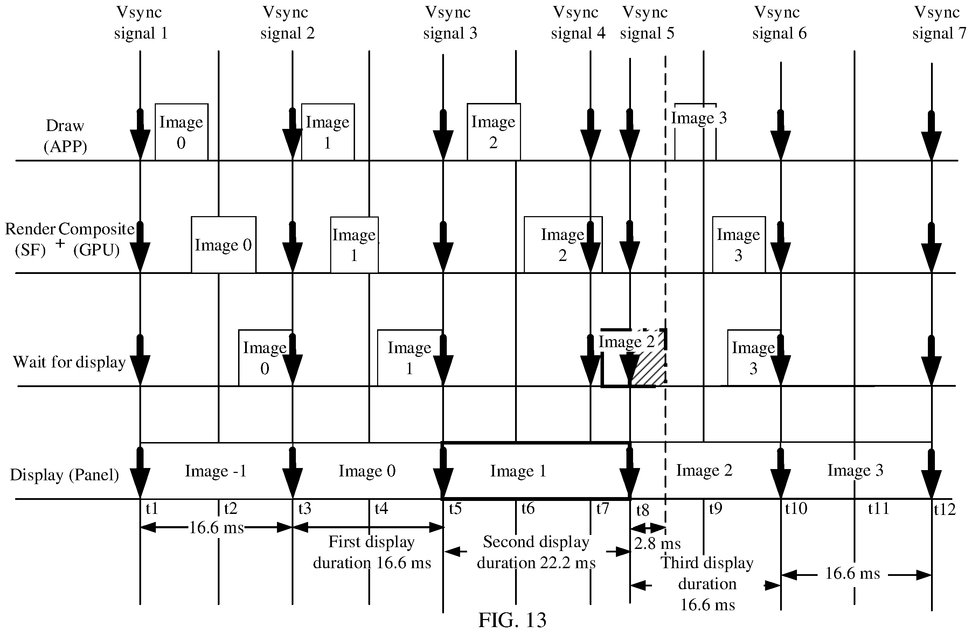

As shown in FIG. 13, in a process that the display screen (which supports a basic frequency of 360 Hz) of the electronic device refreshes and displays an image at a current refresh rate of 60 Hz, if composition processing of an image 2 by the GPU at the system application framework layer exceeds a moment (t7) at which a VSync signal 4 is generated, when the electronic device detects that duration of waiting for a next VSync signal after display data of the image 2 is ready exceeds 2.8 ms, the frequency of outputting a VSync signal by the display screen is increased to 360 Hz, and a moment at which the display screen outputs the next VSync signal is advanced by 2.8 ms. As shown in FIG. 13, the display screen may output a frequency-increased VSync signal 5 (a corresponding Vsync period is 2.8 ms) at a moment t8, and the image display driver writes, at the moment t8, display data of the image 2 that has been composited and delivered to the image display driver by the GPU before the moment t8 into the display screen in response to the VSync signal 5, so that the display screen can start to display the image 2 at the moment t8, thereby greatly shortening duration of waiting for a next VSync signal after the display data of the image 2 is ready. In addition, timeout display duration of the image 1 is shortened, and display duration of the image 2 can be restored to normal duration.

Then, in a process in which the display screen starts to display the image 2 at the moment t8, display duration of the image 2 is maintained as 16.6 ms, that is, the image 2 continues to be displayed until a moment t10. That is, if display data of an image 3 is ready before the moment t10, even if duration between a moment at which display data of the image 3 is ready and the moment t10 exceeds 2.8 ms, the image display driver does not advance a moment at which the display screen outputs a next VSync signal. Instead, at the moment t10, the image display driver writes the display data of the image 3 into the display screen in response to a VSync signal 6, so that the display screen can start to display the image 3 at the moment t10. In addition, the electronic device maintains display duration of the image 3 as 16.6 ms, that is, the image 3 continues to be displayed until a moment t12.

Therefore, in this solution, timeout display duration of an image may be reduced by shortening duration of waiting for display after display data of an image is ready, and display duration of a subsequent image is stabilized, so that a difference in display duration between adjacent images is relatively small, and a jitter in a displayed picture of the device can be less noticeable to the user.

In some other feasible embodiments, there may be a case in which each frame of image undergoes frame catch-up. Because duration of each frame of image being displayed in advance is relatively short, and is generally advanced by only 2.8 ms, although there may be a case in which display duration of several consecutive frames is different, the difference in display duration is so short that the user cannot notice a fluctuation in the frame rates by eyes.

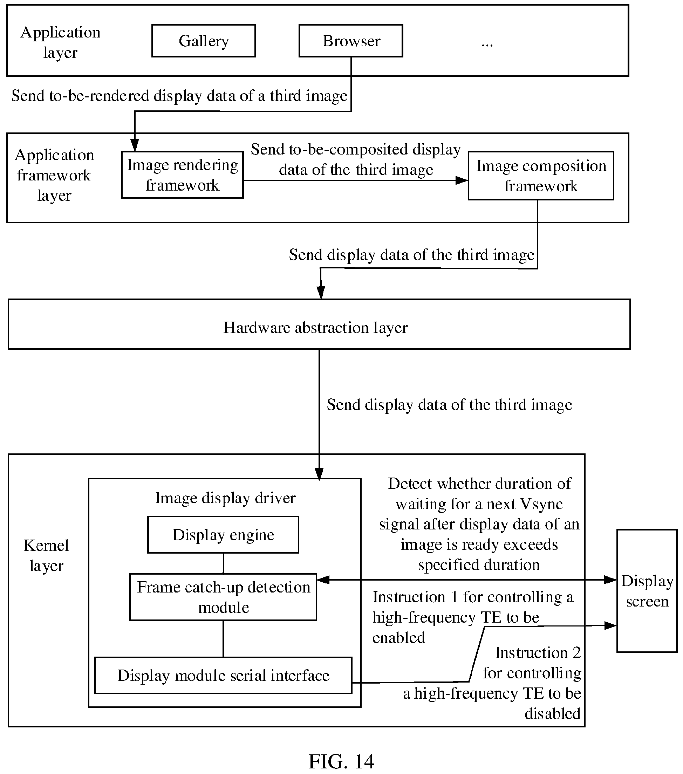

In this embodiment of this application, the electronic device may determine, by means of improvement with reference to a software layer and a hardware layer, whether to increase a frequency of outputting a Vsync signal. That is, the electronic device adds a new hardware module to the system kernel layer, and detects, by using the hardware module, whether display data of an image is ready, so that when the hardware module detects that the display data of the image is ready, the frequency of outputting a Vsync signal by the display screen is increased, thereby shortening duration of waiting for display after the display data of the image is ready, and improving hand-following performance. As shown in FIG. 14, a frame catch-up detection module is newly configured in the image display driver at the kernel layer of the electronic device. Based on this, in response to that the display screen starts to display a second image, the electronic device continuously detects, by using the frame catch-up detection module, whether display data of a third image is ready, and detects whether duration in which the third image waits for a next Vsync signal is greater than or equal to specified duration (2.8 ms). Then, when the frame catch-up detection module detects that the display data of the third image is ready and the duration of waiting for a next Vsync signal is greater than or equal to 2.8 ms, the image display driver delivers a control instruction to the display screen, so as to control the display screen to increase the frequency of outputting a Vsync signal.

In this embodiment of this application, when detecting whether duration in which the third image waits for a next Vsync signal is greater than or equal to the specified duration, the image display driver of the electronic device may detect, by using the newly added frame catch-up detection module of the electronic device, whether duration of the third image waiting for a next Vsync signal is greater than or equal to the specified duration in a process in which the display screen displays the second image. When the frame catch-up detection module detects that the duration in which the third image waits for a next Vsync signal is greater than or equal to the specified duration, the image display driver determines that the third image meets a condition of outputting a next Vsync signal in advance.

When determining that the duration in which the third image waits for a next Vsync signal is greater than or equal to the specified duration, so as to output the Vsync signal in advance and increase the frequency of outputting a Vsync signal by the display screen, the image display driver may send a control instruction to the display screen by using a display module serial interface that establishes a communication connection between the image display driver and the display screen. The display screen responds immediately after receiving the control instruction, so that the frequency of outputting a Vsync signal is increased from an original frequency to a frequency indicated by the control instruction.

In this embodiment of this application, when the frame catch-up detection module detects that the duration of waiting for a next Vsync signal after the display data of the third image is ready is greater than or equal to the specified duration, the image display driver of the electronic device immediately increases a frequency of outputting a Vsync signal by the display screen, outputs the frequency-increased Vsync signal in advance by the specified duration, and writes the display data of the third image into the display screen in response to the frequency-increased Vsync signal, so as to drive the display screen to display the third image. In this way, the duration of waiting for a next Vsync signal after the display data of the third image is ready can be effectively reduced, thereby increasing a display speed of the third image. In addition, comprehensiveness of detecting whether the duration of waiting for a next Vsync signal after the display data of the third image is ready is greater than or equal to the specified duration, and accuracy of enabling the image display driver to immediately send the third image for display by increasing a frequency of outputting a Vsync signal can also be improved.

In some other feasible embodiments, the frame catch-up detection module may be further configured to detect whether duration of waiting for a next Vsync signal after the display data of the second image is ready is greater than or equal to the specified duration. That is, when the electronic device detects, by using the frame catch-up detection module, that the duration of waiting for a next Vsync signal after the display data of the second image is ready is greater than or equal to the specified duration, and the duration in which the third image waits for a next Vsync signal after the display data of the third image is ready is greater than or equal to 2.8 ms, the image display driver delivers a control instruction to the display screen to control the display screen to increase a frequency of outputting a Vsync signal.

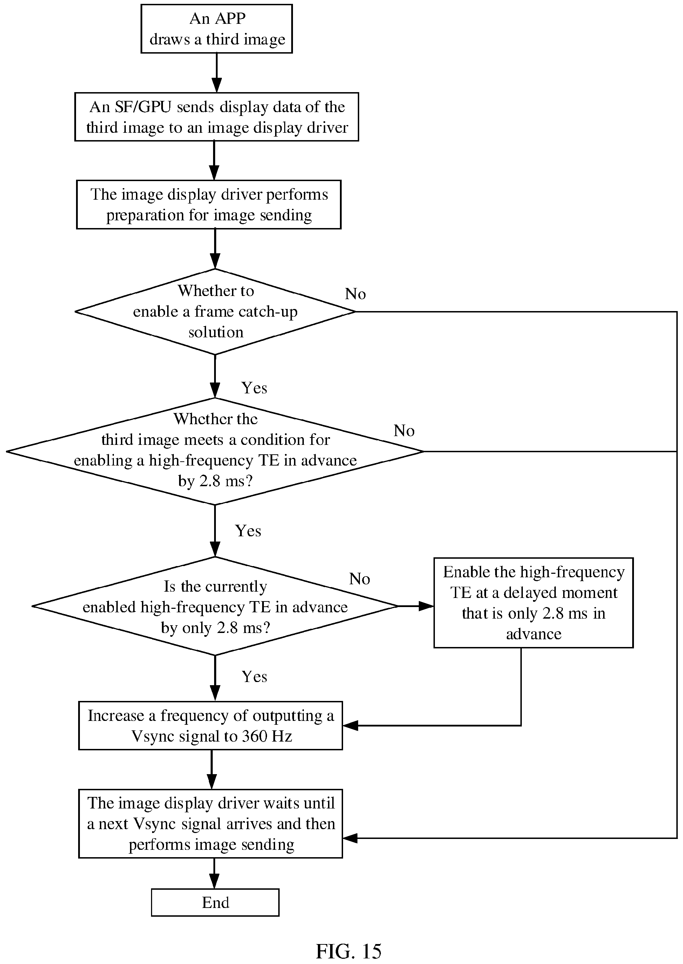

For example, with reference to the system framework of the electronic device shown in FIG. 14 and control logic in which the electronic device uses the method provided in this embodiment of this application to display an image shown in FIG. 15, assuming that the display screen of the electronic device supports a basic frequency of 360 Hz, when the display screen performs image display based on a first Vsync period of 16.6 ms corresponding to a refresh rate of 60 Hz, in a process in which the display screen displays a second image, a browser application APP at the system application layer of the electronic device also draws a next frame of third image of the second image, and sends display data that is of the third image and that is drawn but needs to be rendered to the image rendering service (SF) at the application framework layer. After rendering for the display data is completed, if the display data needs to be further composited, the SF further sends the rendered display data to the image composition service (GPU). After compositing the display data, the GPU delivers the composited display data as display data of the to-be-displayed third image to the hardware abstraction layer. The hardware abstraction layer performs hardware matching, so as to send the display data of the third image to the image display driver at the kernel layer. The image display driver performs preparation for image sending after receiving the display data of the third image.

Then, the image display driver determines whether to enable a frame catch-up solution. If the frame catch-up solution is not enabled, the image display driver directly waits until a next Vsync signal arrives and then performs image sending. If the frame catch-up solution is enabled, in this case, the image display driver obtains a result detected by the frame catch-up detection module. Assuming that the result is that the duration of waiting for a next Vsync signal after the display data of the third image is ready is greater than 2.8 ms (a period of 360 Hz), that is, the third image meets a condition for enabling the high-frequency TE 2.8 ms in advance, in this case, the image display driver may immediately send, by using the display module serial interface (DSI) that establishes a communication connection between the image display driver and the display screen, an instruction 1 for controlling the high-frequency TE to be enabled to the display screen, so as to control the display screen to enable the preset 360 Hz-TE high-frequency synchronization solution in response to the instruction 1 at a moment that is 2.8 ms in advance, thereby increasing a frequency of outputting a Vsync signal by the display screen to 360 Hz.

As shown in FIG. 15, after the image display driver determines, based on the result detected by the frame catch-up detection module, that the third image meets a condition for enabling the high-frequency TE in advance by 2.8 ms, the image display driver determines, by using the result detected by the frame catch-up detection module, whether the currently enabled high-frequency TE is only 2.8 ms in advance. That is, if the duration in which the third image waits for a next Vsync signal after the display data of the third image is ready is greater than twice or more times 2.8 ms, the image display driver sends, by using the display module serial interface (DSI) that establishes a communication connection between the image display driver and the display screen, an instruction 1 for controlling the high-frequency TE to be enabled to the display screen, where the instruction 1 includes that a moment at which the high-frequency TE is enabled is only 2.8 ms in advance than an original moment at which the next Vsync signal is generated. Therefore, the display screen is controlled to enable the preset 360 Hz-TE high-frequency synchronization solution in response to the instruction 1 at a moment that is 2.8 ms in advance, so as to increase a frequency of outputting a Vsync signal by the display screen to 360 Hz. Therefore, when duration of waiting for a next Vsync signal after the display data of the third image is ready is greater than twice or more times 2.8 ms, the image display driver does not control the display screen to generate a frequency-increased Vsync signal in advance by two or more periods of 360 hz, but controls the display screen to generate a frequency-increased Vsync signal at a delayed moment that is only 2.8 ms in advance.

If the result detected by the frame catch-up detection module determines that the currently enabled high-frequency TE is only 2.8 ms in advance, the image display driver immediately sends, by using a display module serial interface (DSI) that establishes a communication connection between the image display driver and the display screen, an instruction 1 for controlling the high-frequency TE to be enabled to the display screen, so as to control the display screen to enable the preset 360 Hz-TE high-frequency synchronization solution in response to the instruction 1 at a moment that is 2.8 ms in advance, thereby increasing a frequency of outputting a Vsync signal by the display screen to 360 Hz.

In some feasible embodiments, after the image display driver of the electronic device increases the frequency of outputting a Vsync signal so as to drive the display screen to display an image in response to the frequency-increased Vsync signal, to avoid a phenomenon that the display screen briefly displays the image and then quickly displays a next frame of image because the image display driver sends the next frame of image of the image for display in advance, the image display driver of the electronic device may not respond to the frequency-increased Vsync signal output by the display screen within display duration in which the display screen displays the image, so as to forcibly prolong the duration in which the display screen displays the image.

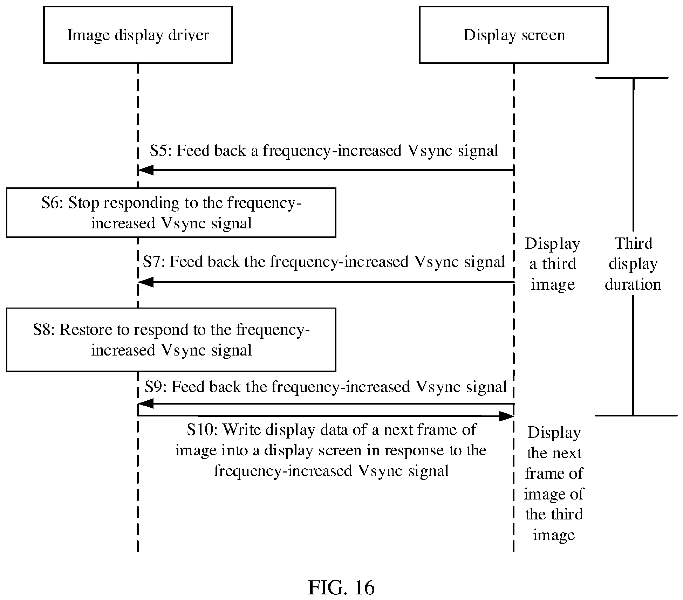

In this embodiment of this application, the electronic device may forcibly prolong, by using steps S5 and S10 shown in FIG. 16, the duration in which the display screen displays the third image. After displaying the third image, the display screen performs step S5: Feed back the frequency-increased Vsync signal. When the image display driver receives the frequency-increased Vsync signal fed back by the display screen, if the third display duration in which the display screen displays the third image is not equal to the first display duration, the image display driver performs step S6: Stop responding to the frequency-increased Vsync signal. Then, the display screen continues to perform step S7: Feed back the frequency-increased Vsync signal. After the image display driver receives the frequency-increased Vsync signal fed back by the display screen, if the third display duration is equal to the first display duration, the image display driver performs S8: Restore to respond to the frequency-increased Vsync signal. Then, the display screen performs step S9: Feed back the frequency-increased Vsync signal. After receiving the Vsync signal, the image display driver performs step S10: Write display data of a next frame of image into the display screen in response to the frequency-increased Vsync signal. In this way, the display screen starts to display the next frame of image.

In this embodiment of this application, after the image display driver of the electronic device writes the display data of the third image into the display screen to drive the display screen to display the third image, the image display driver stops responding to the frequency-increased Vsync signal output by the display screen within the third display duration in which the display screen displays the third image, so as to reject writing display data of a next image of the third image into the display screen within the third display duration.

Then, when the third display duration is equal to the first display duration, the image display driver restores to respond to the frequency-increased Vsync signal output by the display screen, so that the display data of the next image of the third image is written into the display screen after the third display duration is equal to the first display duration.

In this embodiment of this application, the image display driver does not respond to the frequency-increased Vsync signal triggered by the display screen within the third display duration in which the display screen displays the third image, so as to avoid a phenomenon that the display screen briefly displays the third image because the image display driver sends the next image of the third image to the display screen for display in advance in a process in which the display screen displays the third image. In this way, stability of displaying the third image and a subsequent image thereof by the electronic device is further improved.

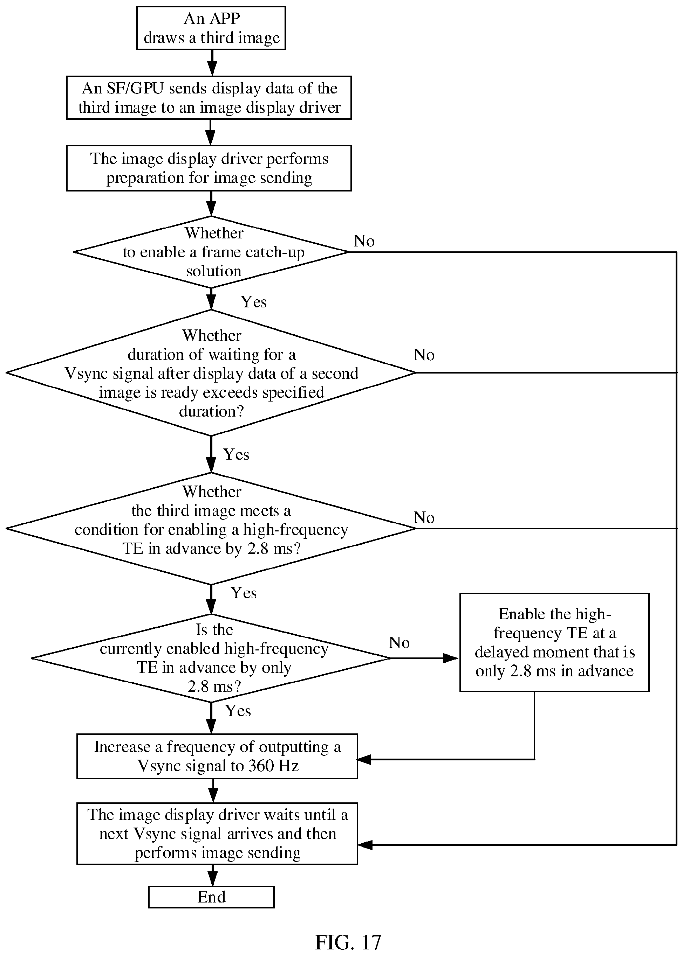

Referring to FIG. 17, FIG. 17 shows another control logic in which the electronic device uses the method provided in this embodiment of this application to display an image. Assuming that the display screen of the electronic device supports a basic frequency of 360 Hz, when the display screen performs image display based on a first Vsync period of 16.6 ms corresponding to a refresh rate of 60 Hz, in a process in which the display screen displays a second image, a browser application APP at the system application layer of the electronic device also draws a next frame of third image of the second image, and sends display data that is of the third image and that is drawn but needs to be rendered to the image rendering service (SF) at the application framework layer. After rendering for the display data is completed, if the display data needs to be further composited, the SF further sends the rendered display data to the image composition service (GPU). After compositing the display data, the GPU delivers the composited display data as display data of the to-be-displayed third image to the hardware abstraction layer. The hardware abstraction layer performs hardware matching, so as to send the display data of the third image to the image display driver at the kernel layer. The image display driver performs preparation for image sending after receiving the display data of the third image.

Then, the image display driver determines whether to enable a frame catch-up solution. If the frame catch-up solution is not enabled, the image display driver directly waits until a next Vsync signal arrives and then performs image sending. If the frame catch-up solution is enabled, in this case, the image display driver obtains a result detected by the frame catch-up detection module. Assuming that the result is that the duration of waiting for a next Vsync signal after the display data of the second image is ready exceeds specified duration, where the specified duration is 2.8 ms (a period of 360 Hz),
in this case, the image display driver determines whether duration in which the third image waits for a next Vsync signal after the display data of the third image is ready is greater than or equal to 2.8 ms. If yes, the third image meets a condition for enabling the high-frequency TE in advance by 2.8 ms. In this case, the image display driver may immediately send, by using the display module serial interface (DSI) that establishes a communication connection between the image display driver and the display screen, an instruction 1 for controlling the high-frequency TE to be enabled to the display screen, so as to control the display screen to enable the preset 360 Hz-TE high-frequency synchronization solution in response to the instruction 1 at a moment that is 2.8 ms in advance, thereby increasing a frequency of outputting a Vsync signal by the display screen to 360 Hz.

If a result that is obtained by the image display driver and that is detected by the frame catch-up detection module is that duration of waiting for a next Vsync signal after the display data of the second image is ready does not exceed 2.8 ms, the image display driver directly waits until a next Vsync signal arrives and then performs image sending.

As shown in FIG. 17, after the image display driver determines, based on a result detected by the frame catch-up detection module, that the third image meets a condition for enabling the high-frequency TE in advance by 2.8 ms, the image display driver determines, by using the result detected by the frame catch-up detection module, whether the currently enabled high-frequency TE is only 2.8 ms in advance. That is, if the duration in which the third image waits for a next Vsync signal after the display data of the third image is ready is greater than twice or more times 2.8 ms, the image display driver sends, by using the display module serial interface (DSI) that establishes a communication connection between the image display driver and the display screen, an instruction 1 for controlling the high-frequency TE to be enabled to the display screen, where the instruction 1 includes that a moment at which the high-frequency TE is enabled is only 2.8 ms in advance than an original moment at which the next Vsync signal is generated. Therefore, the display screen is controlled to enable the preset 360 Hz-TE high-frequency synchronization solution in response to the instruction 1 at a moment that is 2.8 ms in advance, so as to increase a frequency of outputting a Vsync signal by the display screen to 360 Hz. Therefore, when duration of waiting for a next Vsync signal after the display data of the third image is ready is greater than twice or more times 2.8 ms, the image display driver does not control the display screen to generate a frequency-increased Vsync signal two or more periods of 360 hz in advance, but controls the display screen to generate a frequency-increased Vsync signal at a delayed moment that is only 2.8 ms in advance.

If the result detected by the frame catch-up detection module determines that the currently enabled high-frequency TE is only 2.8 ms in advance, the image display driver immediately sends, by using the display module serial interface (DSI) that establishes a communication connection between the image display driver and the display screen, an instruction 1 for controlling the high-frequency TE to be enabled to the display screen, so as to control the display screen to enable the preset 360 Hz-TE high-frequency synchronization solution in response to the instruction 1 at a moment that is 2.8 ms in advance, thereby increasing a frequency of outputting a Vsync signal by the display screen to 360 Hz.

In this embodiment of this application, by recording a timestamp when the second image starts to wait for arrival of a next Vsync signal after the display data of the second image is ready, and recording a timestamp when the image display driver writes the display data of the second image into the display screen after the next Vsync signal arrives, duration in which the second image starts to wait for a next Vsync signal after the display data of the second image is ready may be calculated.

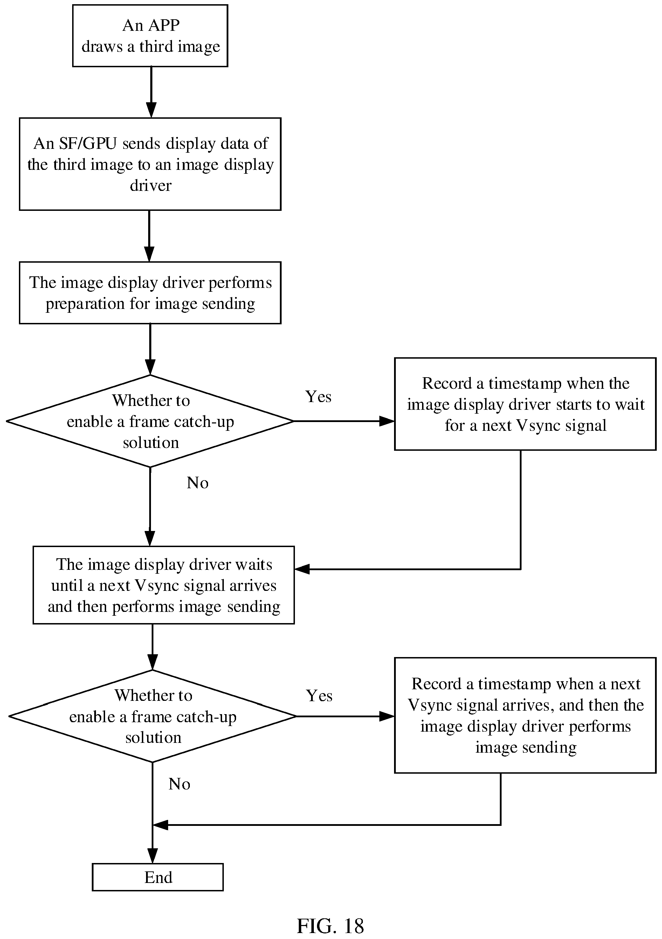

Referring to FIG. 18, FIG. 18 shows a control logic for obtaining duration in which the second image starts to wait for a next Vsync signal after the display data of the second image is ready according to an embodiment of this application. Assuming that the display screen of the electronic device supports a basic frequency of 360 Hz, when the display screen performs image display based on a first Vsync period of 16.6 ms corresponding to a refresh rate of 60 Hz, in a process in which the display screen displays a first image, a browser application APP at the system application layer of the electronic device also draws a second image of a next frame of the first image, and sends display data that is of the second image and that is drawn but needs to be rendered to the image rendering service (SF) at the application framework layer. After rendering for the display data is completed, if the display data needs to be further composited, the SF further sends the rendered display data to the image composition service (GPU). After compositing the display data, the GPU delivers the composited display data as display data of the to-be-displayed second image to the hardware abstraction layer. The hardware abstraction layer performs hardware matching, so as to send the display data of the second image to the image display driver at the kernel layer. The image display driver performs preparation for image sending after receiving the display data of the second image.

Then, the image display driver determines whether to enable a frame catch-up solution. If the frame catch-up solution is not enabled, the image display driver directly waits until a next Vsync signal arrives and then performs image sending. If the frame catch-up solution is enabled, in this case, the image display driver starts to record a timestamp when the second image starts to wait for arrival of a next Vsync signal after the display data of the second image is ready. Then, after the next Vsync signal arrives, the image display driver performs an image sending operation, that is, writes the display data of the second image into the display screen. In this case, the image display driver further determines whether to enable the frame catch-up solution. If the frame catch-up solution is not enabled, the process ends. If the frame catch-up solution is enabled, in this case, the image display driver starts to record a timestamp when a next Vsync signal arrives, and then the image display driver performs image sending. Therefore, by using the two recorded timestamps, the duration in which two images start to wait for a next Vsync signal after the display data of the two images is ready may be calculated.

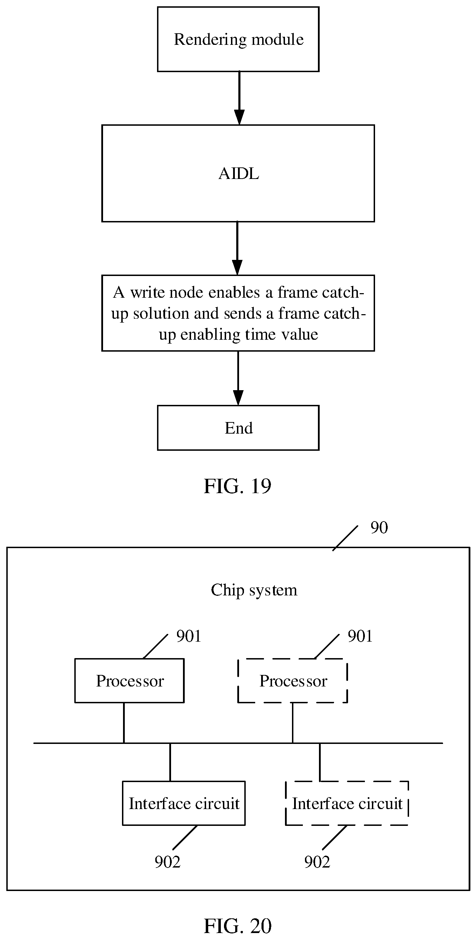

Referring to FIG. 19, FIG. 19 shows a schematic flowchart of configuring a frame catch-up solution. An SF module may enable a frame catch-up solution by using an Android Interface Definition Language (Android Interface Definition Language, AIDL) interface write node, and send a frame catch-up enabling time value. The frame catch-up enabling time value indicates duration by which the display screen outputs a VSync signal in advance. For example, the frame catch-up enabling time value may be 2.8 ms, or the frame catch-up start enabling value is indicated by using a flag bit. For example, a flag bit 1 may indicate that the frame catch-up enabling time value is 2.8 ms, and a flag bit 2 may indicate that the frame catch-up enabling time value is 5.5 ms.

In some embodiments, an embodiment of this application provides an electronic device. The electronic device has a function of implementing the image display method described in the foregoing embodiments. The function may be implemented by using hardware, or may be implemented by executing corresponding software by hardware. The hardware or the software includes one or more modules corresponding to the foregoing function.

In some embodiments, an embodiment of this application provides an electronic device, including a processor and a memory. The memory is configured to store computer program code. The computer program code includes computer-executable instructions. When the electronic device runs, the processor executes the computer-executable instructions, so that the electronic device performs the image display method described in the foregoing embodiments.

In some embodiments, an embodiment of this application provides an electronic device, including a processor. The processor is configured to: be coupled to a memory and read instructions in the memory to perform the image display method described in the foregoing embodiments according to the instructions.

In some embodiments, an embodiment of this application provides a computer-readable storage medium, including computer instructions. When the computer instructions are run on an electronic device, the electronic device is enabled to perform the wallpaper display method described above.

In some embodiments, an embodiment of this application provides a computer program product. When the computer program product runs on an electronic device, the electronic device is enabled to perform the image display method described in the foregoing embodiments.

In some embodiments, an embodiment of this application provides a computer program product including instructions. When the computer program product runs on a computer, the computer is enabled to perform the image display method described in the foregoing embodiments.

In some embodiments, an embodiment of this application provides an apparatus (for example, the apparatus may be a display system). The apparatus includes a processor, configured to support an electronic device in implementing the functions in the image display method described in the foregoing embodiments. In a possible design, the apparatus further includes a memory. The memory is configured to store program instructions and data that are necessary for the electronic device.

An embodiment of this application further provides a chip system. As shown in FIG. 20, the chip system 90 includes at least one processor 901 and at least one interface circuit 902. The processor 901 and the interface circuit 902 may be connected to each other through a line. For example, the interface circuit 902 may be configured to receive a signal from another apparatus (for example, a memory of an electronic device). For another example, the interface circuit 902 may be configured to send a signal to another apparatus (for example, the processor 901). For example, the interface circuit 902 may read instructions stored in the memory, and send the instructions to the processor 901. When the instructions are executed by the processor 901, the electronic device may be enabled to perform the steps in the foregoing embodiments. Certainly, the chip system may further include another discrete device. This is not specifically limited in this embodiment of this application.

It may be clearly learned by a person skilled in the art from the foregoing description of the implementations that, for convenience and brevity of description, only division into the foregoing functional modules is used as an example for description. In actual application, the foregoing functions may be allocated to different functional modules for implementation according to a requirement, that is, an internal structure of an apparatus is divided into different functional modules, to complete all or some of the functions described above.

In the several embodiments provided in this application, it should be understood that the disclosed apparatus and method may be implemented in another manner. For example, the foregoing apparatus embodiments are merely examples. For example, division of the modules or the units is merely logical function division and may be another division manner in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form. The units described as separate parts may or may not be physically separate, and parts displayed as units may be one or more physical units, in other words, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each unit may exist alone physically, or two or more units may be integrated into one unit. The integrated unit may be implemented in a form of hardware, or may be implemented in a form of a software functional unit. When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in the embodiments of this application. The foregoing storage medium includes various media that can store program code, for example, a USB flash drive, a removable hard disk, a read-only memory (read only memory, ROM), a random access memory (random access memory, RAM), a magnetic disk, or an optical disc.

The foregoing content is only specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. An image display method, wherein the method is applied to an electronic device, the electronic device comprises a display screen, and the method comprises:
generating, by the electronic device, a first Vsync signal at a first moment, and starting to display a first image on the display screen in response to the first Vsync signal, wherein the first Vsync signal corresponds to a first Vsync signal period, and first display duration for displaying the first image is the same as duration of the first Vsync signal period;
generating, by the electronic device, a second Vsync signal at a second moment, and starting to display a second image on the display screen in response to the second Vsync signal, wherein the second Vsync signal corresponds to a second Vsync signal period, the second moment is after the first moment, and the second image is a next frame of image of the first image; and
detecting whether composition of display data of a third image is completed after starting to display the second image on the display screen, wherein the third image is a next frame of image of the second image; and delivering a control instruction to the display screen if composition of the display data of the third image is completed, wherein the control instruction is used to control a frequency of generating a Vsync signal.

2. The method according to claim 1, wherein the delivering, by the image display driver, a control instruction to the display screen if composition of the display data of the third image is completed comprises:
delivering the control instruction to the display screen if duration between a moment at which composition of the display data of the third image is completed and a moment that is preset by the electronic device for generation of a third Vsync signal is greater than or equal to preset interval duration.

3. The method according to claim 2, wherein the electronic device further comprises the image display driver, and the delivering the control instruction to the display screen if duration between a moment at which composition of the display data of the third image is completed and a moment that is preset by the electronic device for generation of a third Vsync signal is greater than or equal to preset interval duration is specifically:
delivering, by the image display driver, the control instruction to the display screen if the duration between the moment at which composition of the display data of the third image is completed and the moment that is preset by the electronic device for generation of the third Vsync signal is greater than or equal to the preset interval duration, wherein the control instruction is used to control a frequency of generating a Vsync signal, so that a frequency of generating a Vsync signal by the display screen is higher than a current frequency of generating a Vsync signal by the display screen.

4. The method according to claim 2, wherein the preset interval duration is 2.8 ms.

5. The method according to any one of claims 1 to 4, wherein after the delivering a control instruction to the display screen, the method further comprises:
generating, by the electronic device, a third Vsync signal at a third moment, wherein the third Vsync signal corresponds to a third Vsync signal period, the third moment is after the second moment, and the third Vsync signal period is less than the first Vsync signal period.

6. The method according to claim 5, wherein the second Vsync signal period is less than the first Vsync signal period, and second display duration for displaying the second image is less than the first display duration.

7. The method according to claim 6, wherein the first Vsync signal period is 16.6 ms, and the third Vsync signal period is 2.8 ms.

8. The method according to claim 7, wherein the second Vsync signal period is 13.8 ms, and the second display duration is 13.8 ms.

9. The method according to claim 5, wherein the method further comprises:
generating, by the electronic device, a fourth Vsync signal at a fourth moment, and starting to display a fourth image on the display screen in response to the fourth Vsync signal, wherein the fourth moment is after the third moment, the fourth Vsync signal corresponds to the fourth Vsync signal period, the fourth Vsync signal period is the same as the first Vsync period, and fourth display duration for displaying the fourth image is the same as the first display duration.

10. The method according to claim 9, wherein the method further comprises: delivering a control instruction to the display screen before the fourth moment, wherein the control instruction is used to control a frequency of generating a Vsync signal.

11. The method according to claim 10, wherein the delivering a control instruction to the display screen before the fourth moment, wherein the control instruction is used to control a frequency of generating a Vsync signal is specifically:
delivering, by the image display driver, the control instruction to the display screen, wherein the control instruction is used to control a frequency of generating a Vsync signal, so that a frequency of generating a Vsync signal by the display screen is lower than the current frequency of generating a Vsync signal by the display screen.

12. An electronic device, wherein the electronic device comprises a communication module, a display screen, a memory, and one or more processors; the communication module, the display screen, the memory, and the processor are coupled; and the memory is configured to store computer program code, the computer program code comprises computer instructions, and when the computer instructions are executed by the electronic device, the electronic device is enabled to perform the method according to any one of claims 1 to 11.

13. A computer-readable storage medium, wherein the computer-readable storage medium stores instructions, and when the instructions are run on an electronic device, the electronic device is enabled to perform the method according to any one of claims 1 to 11.
